# EUROPEAN PATENT SPECIFICATION

(11) **EP 3 300 274 B1**
(45) Date of publication and mention of the grant of the patent: **03.03.2021**
(21) Application number: 15897470.9
(22) Date of filing: 08.07.2015
(51) Int. Cl.: H04L 1/00

(54) **USER EQUIPMENT AND NETWORK SIDE EQUIPMENT, AND METHOD OF DETERMINING PROCESSING MODE FOR DATA PACKET**
BENUTZERGERÄT UND NETZWERKSEITIGE AUSRÜSTUNG UND VERFAHREN ZUR BESTIMMUNG DES VERARBEITUNGSMODUS FÜR EIN DATENPAKET
ÉQUIPEMENT UTILISATEUR ET ÉQUIPEMENT CÔTÉ RÉSEAU, ET PROCÉDÉ DE DÉTERMINATION DE MODE DE TRAITEMENT POUR PAQUET DE DONNÉES

(43) Date of publication of application: 28.03.2018
(73) Proprietor: Huawei Technologies Co., Ltd., Longgang Shenzhen, Guangdong 518129 (CN)
(72) Inventor: PANG, Lingli, Shenzhen Guangdong 518129 (CN); ZHENG, Xiaoxiao, Shenzhen Guangdong 518129 (CN)
(74) Representative: Thun, Clemens
(86) International application number: PCT/CN2015/083603
(87) International publication number: WO 2017/004814

(56) References cited:
- EP-A1- 1 959 601
- WO-A1-2005/022814
- CN-A- 101 835 197
- CN-A- 101 997 729
- CN-A- 102 025 737
- CN-A- 102 468 920
- CN-A- 103 905 921
- US-A1- 2006 274 789

## Description

### TECHNICAL FIELD

The present invention relates to the field of communications technologies, and in particular, to user equipment, a network device, and a method for determining a processing mode for a data packet.

### BACKGROUND

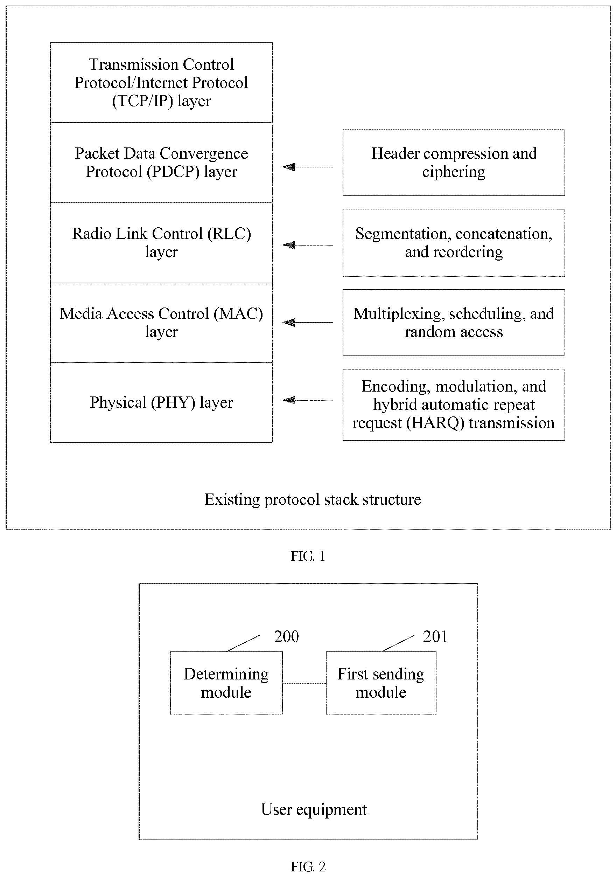

In an existing wireless communications system, FIG. 1 is a schematic diagram of an existing protocol stack structure on an access network. For a transmit end, layers from top to bottom are respectively a packet data convergence protocol (PDCP) layer, a radio link control (RLC) layer, a media access control (MAC) layer, and a physical (PHY) layer. After a service data packet sent from an application layer is received at the PDCP layer, header compression and encryption are performed on the data packet. The RLC layer provides segmentation and retransmission services for a data packet, including segmentation, concatenation, reordering, and the like of a data packet. The MAC layer is responsible for multiplexing and scheduling of a data packet, and is responsible for random access processing. The PHY layer is responsible for encoding and modulation of a data packet, hybrid automatic repeat request (HARQ) transmission, and the like.

For example, WO 2005/022814A1 refers to an outer coding entity provided above the Radio Link Control (RLC) layer, comprising: a destination station that includes a receiver; and a origination station that includes a transmitter that communicates with the receiver over the radio interface via a common logical channel.

Further, CN 103905921 A refers to a method for transmitting multimedia data and an electronic device. The method comprises the steps that when a first electronic device and a second electronic device need to execute multimedia data transmission, the first electronic device establishes a multimedia data transmission link for transmitting the multimedia data between the first electronic device and the second electronic device; data to be transmitted are acquired, and whether the data to be transmitted are first multimedia data transmitted through the multimedia data transmission link is judged to obtain a first judgment result; if the first judgment result is that the data to be transmitted are the first multimedia data transmitted through the multimedia data transmission link, the first multimedia data are loaded to a physical layer through a first multimedia data interface connected with the physical layer directly and transmitted to the second electric device through the multimedia data transmission link. By means of the method and the electronic device, data of the physical layer can be acquired and transmitted directly, and the multimedia data can be acquired and inserted more quickly.

A process in which a receive end performs data processing on a received data packet is exactly reverse to that of the transmit end. That user equipment serves as the transmit end is used as an example. After a data packet is processed at each protocol layer, the data packet carries a header of the protocol layer, and the data packet with the header is used as input to a next protocol layer. Therefore, usually, each time the data packet is processed at a protocol layer, a header is added to the data packet. For example, after the data packet reaches the PDCP layer, a header of the PDCP layer is added to the data packet, and the data packet is then sent to the RLC layer for processing. If processing at the RLC layer is completed, a header of the RLC layer is also added to the data packet, and the data packet is transmitted to the MAC layer, and is processed at the MAC layer. After processing at the MAC layer is completed, a header of the MAC layer is further added to the data packet, and the data packet is then transmitted to the PHY layer. After encoding and modulation are performed on the data packet at the PHY layer, the data packet is finally sent to a network device. This type of protocol stack structure is applicable to all types of services, and may ensure reliability of data packet transmission and high utilization of air-interface resources.

However, with the rapid development of an Internet of Things technology, an increasing quantity of intelligent devices (for example, a smart metering device) or sensors with an undiversified function can transmit data by using a wireless network. Data transmission amounts of some devices are small, and a requirement for data transmission costs is low. If processing is still performed according to a data packet processing mode in the protocol stack structure, that is, a header needs to be added to a data packet at each protocol layer, a quantity of headers of the data packet may be increased, and utilization of air-interface resources is reduced. In addition, overheads of this type of intelligent device are also increased, and data transmission costs are increased.

### SUMMARY

The present invention provides an apparatus according to appended claim 1, for determining a processing mode for a data packet. An encapsulation format of a data packet is determined by determining a processing mode for the data packet, so that utilization of air-interface resources is increased.

In a first aspect an apparatus comprising a sending apparatus and a processor are provided, wherein:
- the processor is configured to determine a processing mode for a data packet according to at least one of a device type of the apparatus, a service type, a processing mode supported by the apparatus, a user plane function supported by the apparatus, or a processing mode supported by a network device, and process the data packet according to the determined processing mode,
- the processor is further configured to add first indication information to resource request information and the sending apparatus is configured to send the resource request information to the network device, wherein the resource request information is used to request a resource required for sending the processed data packet, wherein the first indication information is used to indicate the processing mode that is for the data packet and that is determined by the processor,
- the sending apparatus is configured to send the processed data packet to the network device on resource obtained from the network device.

In a first implementation form of the first aspect the processing mode for the data packet comprises at least one of a segmentation of the data packet, a concatenation of the data packet, an out-of-order transmission of the data packet, or a transparent transmission of the data packet.

In a second implementation form of the first aspect the first indication information is at least one of service type information, device type information, function information of a data processing layer, or data packet encapsulation format information.

By using the present invention, user equipment determines a processing mode for a data packet, and the user equipment processes the data packet according to the determined processing mode, and sends the data packet to a network device. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of an existing protocol stack structure;
FIG. 2 is a schematic structural diagram of an embodiment of user equipment according to an embodiment of the present invention;
FIG. 3 is a schematic structural diagram of another embodiment of user equipment according to an embodiment of the present invention;
FIG. 4 is a schematic structural diagram of user equipment in a first processing mode according to an embodiment of the present invention;
FIG. 5 is a schematic structural diagram of a first type of encapsulation format in a first processing mode for a data packet according to an embodiment of the present invention;
FIG. 6 is a schematic diagram of a protocol stack structure of user equipment in a second processing mode according to an embodiment of the present invention;
FIG. 7 is a schematic structural diagram of a second type of encapsulation format in a second processing mode for a data packet according to an embodiment of the present invention;
FIG. 8 is a schematic diagram of a protocol stack structure of user equipment in a third processing mode according to an embodiment of the present invention;
FIG. 9 is a schematic structural diagram of a third type of encapsulation format in a third processing mode for a data packet according to an embodiment of the present invention;
FIG. 10 is a schematic diagram of a protocol stack structure of user equipment in a fourth processing mode according to an embodiment of the present invention;
FIG. 11 is a schematic structural diagram of an embodiment of a fourth type of encapsulation format in a fourth processing mode for a data packet according to an embodiment of the present invention;
FIG. 12 is a schematic structural diagram of another embodiment of a fourth type of encapsulation format in a fourth processing mode for a data packet according to an embodiment of the present invention;
FIG. 13 is a schematic structural diagram of user equipment in a fifth processing mode according to an embodiment of the present invention;
FIG. 14 is a schematic structural diagram of a fifth type of encapsulation format in a fifth processing mode for a data packet according to an embodiment of the present invention;
FIG. 15 is a schematic structural diagram of another embodiment of user equipment according to an embodiment of the present invention;
FIG. 16 is a schematic structural diagram of an embodiment of a network device according to an embodiment of the present invention;
FIG. 17 is a schematic structural diagram of another embodiment of a network device according to an embodiment of the present invention;
FIG. 18 is a schematic structural diagram of another embodiment of a network device according to an embodiment of the present invention;
FIG. 19 is a schematic flowchart of an embodiment of a method for determining a processing mode for a data packet according to an embodiment of the present invention;
FIG. 20 is a schematic flowchart of another embodiment of a method for determining a processing mode for a data packet according to an embodiment of the present invention;
FIG. 21 is a schematic flowchart of another embodiment of a method for determining a processing mode for a data packet according to an embodiment of the present invention; and
FIG. 22 is a schematic flowchart of another embodiment of a method for determining a processing mode for a data packet according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

Embodiments of the present invention provide user equipment, a network device, and a method for determining a processing mode for a data packet. An encapsulation format of a data packet is determined by determining a processing mode for the data packet, so that utilization of air-interface resources is increased.

In the specification, claims, and accompanying drawings of the present invention, the terms "first", "second", "third", "fourth", and so on are intended to distinguish between different objects but do not indicate a specific sequence. In addition, the terms "include" and "have", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Referring to FIG. 2, FIG. 2 is a schematic structural diagram of an embodiment of user equipment according to an embodiment of the present invention. This embodiment of the present invention may be applied to a wireless communications system, and may be specifically applied to an Internet of Things. User equipment and a network device are included in this embodiment. The user equipment may be a mobile phone, a tablet computer, a laptop computer, a palmtop computer, a mobile internet device (MID), a wearable device (such as a smartwatch (such as iWatch), a smart band, or a pedometer), or another terminal device that can interact with the network device. The network device may be a node that exchanges data with the user equipment, such as an evolved NodeB (eNB) or a core network node. Alternatively, the network device may be user equipment. An entity for processing a data packet in this embodiment of the present invention is referred to as a data processing layer, and the data processing layer may be subdivided into layers according to different functions. Therefore, processing of a data packet in this embodiment of the present invention may be performed by a data processing layer of the user equipment.

The user equipment shown in FIG. 2 includes a determining module 200 and a first sending module 201.

The determining module 200 is configured to determine a processing mode for a data packet.

In a specific implementation, the user equipment determines the processing mode for the data packet according to at least one of a device type, a service type, a processing mode supported by the user equipment, a user plane function supported by the user equipment, or a processing mode supported by the network device. The processing mode includes at least one of concatenation of the data packet, segmentation of the data packet, out-of-order transmission of the data packet, or transparent transmission of the data packet. For example, the service type may include parameters such as a size of a service data packet, an arrival time interval between service data packets, and a transmission delay requirement for a service data packet. By using the service type as an example, for a service of transmitting continuous small data packets, the user equipment performs only concatenation on the data packets, and for a service of a meter reading type (a data packet in this type of service is relatively small, and a transmission interval between data packets is large), the user equipment performs no processing at a data processing layer. Therefore, the user equipment first needs to determine the processing mode for the data packet. After the user equipment determines the processing mode for the data packet, when the user equipment sends the data packet to the network device, an encapsulation format of the data packet or content of header information of the data packet is corresponding to the processing mode.

In a specific implementation, the user equipment may support only an undiversified service type. For example, a smart meter supports only a meter reading service. Therefore, a processing mode of the user equipment is fixed. In this case, the user equipment directly determines the processing mode according to a device type.

It should be noted that the processing mode herein may be replaced with a data packet encapsulation format, a function of the data processing layer, or the like, to uniquely determine processing for the data packet.

The first sending module 201 is configured to: process the data packet according to the determined processing mode, and send the data packet to the network device.

In a specific implementation, when both the user equipment and the network device determine the processing mode for the data packet, in a data transmission process, after the user equipment processes the data packet according to the determined processing mode, the user equipment sends the data packet to the network device. In this case, the network device may perform corresponding processing on the received data packet according to the mode for processing the data packet by the user equipment, so that processing performed by the network device is corresponding to that performed by the user equipment. For example, after the user equipment segments a data packet, the network device needs to combine segmented data packets. Alternatively, after the user equipment performs concatenation on a data packet, the network device needs to decompose a received data packet obtained after the concatenation, to obtain the data packet existing before the concatenation. Alternatively, when data packets are out of order during transmission performed by the user equipment, the network device needs to perform reordering processing on the received data packets.

In a feasible manner, before the determining module 200 determines the processing mode for the data packet, the user equipment may receive second indication information sent by the network device. The second indication information is used to indicate a processing mode that is for the data packet and that is determined by the network device. For example, the second indication information may specifically indicate that: the data processing layer may perform at least one of concatenation of the data packet, segmentation of the data packet, out-of-order transmission of the data packet, or transparent transmission of the data packet. Transparent transmission of the data packet may be indicated in the following manner: The second indication information indicates that none of segmentation, concatenation, and out-of-order transmission of the data packet is supported. If the second indication information given by the network device indicates only one type of processing mode, the user equipment uses the processing mode specified by the network device. The user equipment processes the data packet according to the processing mode specified by the network device, and sends a processed data packet to the network device. The data packet does not need to carry indication information (such as first indication information in the following) of the processing mode for the data packet.

In a feasible manner, after the user equipment determines the mode for processing the data packet by the user equipment, the user equipment sends the first indication information to the network device, so that the network device determines, according to the first indication information, the mode for processing the data packet by the user equipment. The first indication information herein may include at least one of service type information, device type information, data packet encapsulation format information, or function information of the data processing layer. The service type information is a type of a service corresponding to a data packet transmitted between the user equipment and the network device, for example, a streaming media service, a low delay service, or a background service. The function information of the data processing layer includes at least one of segmentation of the data packet, concatenation of the data packet, out-of-order transmission of the data packet, reordering of the data packet, or transparent transmission of the data packet. Transparent transmission means that the data processing layer does not support any function of segmentation, concatenation, or out-of-order transmission.

Optionally, after the network device determines, according to the first indication information, the mode for processing the data packet by the user equipment, the network device may feed acknowledgement information back to the user equipment, and the acknowledgement information is used to acknowledge whether the network device agrees to use a processing mode corresponding to the processing mode selected by the user equipment.

In a feasible manner, the user equipment adds the first indication information to the header information of the data packet sent by the user equipment to the network device.

In a specific implementation, when sending the data packet to the network device, the user equipment may add the first indication information to the header information of the data packet. The first indication information is used to indicate the mode for processing the data packet by the user equipment. After receiving the data packet sent by the user equipment, the network device obtains, by parsing the header information, the mode for processing the data packet by the user equipment.

In a feasible manner, the user equipment adds the first indication information to signaling that is sent by the user equipment to the network device. Optionally, the signaling sent by the user equipment to the network device may be non-access stratum (NAS) signaling or radio resource control (RRC) signaling.

Optionally, the signaling sent by the user equipment to the network device may be used to request establishment of a service.

Optionally, if the user equipment chooses to add the first indication information to the signaling, when sending the data packet to the network device, the user equipment no longer needs to add the first indication information to the header information of the data packet.

In a feasible manner, the user equipment adds the first indication information to resource request information that is sent by the user equipment to the network device. The resource request information is used to request a resource required for sending the data packet by the user equipment.

In a specific implementation, when requesting, from the network device, the resource required for sending the data packet, the user equipment notifies the network device of the processing mode that is for the data packet and that is determined by the user equipment. Specifically, the user equipment may add the first indication information to the resource request information. For example, the resource request information may be one or more of random access sequence information, random access time information, or random access frequency information, and each of the random access sequence information, the random access time information, and the random access frequency information may be the first indication information.

Optionally, if the user equipment chooses to add the first indication information to the resource request information, when sending the data packet to the network device, the user equipment no longer needs to add the first indication information to the header information of the data packet.

It should be noted that the processing mode determined in this embodiment of the present invention may be only a processing mode used when the user equipment serves as a transmit end, or may be only a processing mode used when the user equipment serves as a receive end, or may be a common processing mode used when the user equipment serves as both a transmit end and a receive end. This is not limited herein. In addition, the processing mode determined in this embodiment may be used for a service or a bearer of the user equipment, or may be used for all services or all bearers of the user equipment.

By using this embodiment of the present invention, user equipment determines a processing mode for a data packet, and the user equipment processes the data packet according to the determined processing mode, and sends the data packet to a network device. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

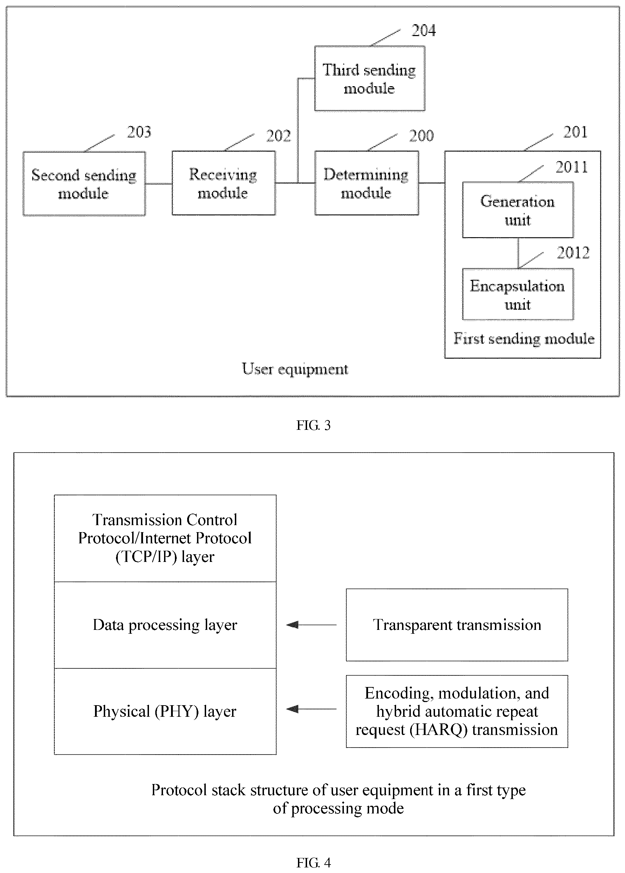

Referring to FIG. 3, FIG. 3 is a schematic structural diagram of another embodiment of user equipment according to an embodiment of the present invention. The user equipment shown in FIG. 3 is further described based on the embodiment of FIG. 2.

The user equipment shown in FIG. 3 includes a determining module 200 and a first sending module 201.

The determining module 200 is configured to determine a processing mode for a data packet.

The first sending module 201 is configured to: process the data packet according to the determined processing mode, and send the data packet to a network device.

Optionally, the determining module 200 is specifically configured to:
determine the processing mode for the data packet according to at least one of a device type, a service type, a processing mode supported by the user equipment, a user plane function supported by the user equipment, or a processing mode supported by the network device.

Optionally, the user equipment further includes a receiving module 202.

The receiving module 202 is configured to receive second indication information sent by the network device, where the second indication information is used to indicate a processing mode that is for the data packet and that is determined by the network device.

Optionally, before the receiving module 202 receives the second indication information sent by the network device, the network device may receive third indication information sent by the user equipment. The third indication information is used to indicate a processing mode that is for the data packet and that is supported by the user equipment. The third indication information may specifically include a function of a data processing layer, a data encapsulation format, a number of a processing mode, and the like. Preferably, the third indication information, a service type and a device type of the user equipment, and the like are sent to the network device in same signaling, or a service type of the user equipment or a device type of the user equipment or both also belongs to a type of third indication information. After receiving the third indication information sent by the user equipment, the network device determines, from the obtained processing mode that is for the data packet and that is supported by the user equipment, a mode for processing the data packet by the network device that is corresponding to that for processing the data packet by the user equipment.

In a feasible manner, a processing mode of a transmit end may mean that the transmit end supports at least one of concatenation of the data packet, segmentation of a data packet, out-of-order transmission of a data packet, or transparent transmission of a data packet. Correspondingly, a processing mode of a receive end may be at least one of decomposition of a data packet obtained after concatenation, combination of segmented data packets, reordering of data packets, or transparent transmission of a data packet.

In a feasible manner, transparent transmission at the data processing layer means that the data processing layer does not support any processing of segmentation, concatenation, or out-of-order transmission of a data packet. That is, the data processing layer directly delivers a data packet at an application layer to a bottom layer.

The determining module 200 is further configured to determine the processing mode for the data packet according to the received second indication information, where the processing mode determined by the determining module 200 is at least one of the processing mode determined by the network device.

In a specific implementation, the second indication information sent by the network device may indicate the processing mode that is for the data packet and that is determined by the network device. For example, the second indication information may specifically indicate that: the data processing layer may perform at least one of concatenation of the data packet, segmentation of the data packet, out-of-order transmission of the data packet, or transparent transmission of the data packet. Transparent transmission of the data packet may be indicated in the following manner: The second indication information indicates that none of segmentation, concatenation, and out-of-order transmission of the data packet is supported.

It should be noted that out-of-order transmission performed by the transmit end is corresponding to a reordering function of the receive end. This specifically means that the receive end may support out-of-order receiving, and further perform reordering on data packets according to sequence numbers. Generally, because data packets may be out of order when the transmit end performs out-of-order transmission or supports retransmission at the data processing layer, a data packet that is earlier initially transmitted reaches the receive end later than a data packet that is later initially transmitted.

Optionally, the second indication information may indicate that different processing modes may be used. That is, the transmit end may use different processing modes according to a requirement, and indicate a processing mode specific to a data packet in header information of the data packet. The indication manner is in particular applicable to user equipment with multiple services.

In a specific implementation, the user equipment may determine, according to the second indication information from the processing mode that is for the data packet and that is determined by the network device, the mode for processing the data packet by the user equipment. The processing mode determined by the user equipment is at least one of the processing mode determined by the network device. For example, if the second indication information given by the network device indicates only one type of processing mode, the user equipment uses the processing mode specified by the network device. If the second indication information indicates multiple types of processing modes, the user equipment may select at least one type of processing mode from the multiple types of processing modes indicated by the second indication information, and indicate the processing mode to the network device.

Optionally, the user equipment further includes a second sending module 203.

The second sending module 203 is configured to send third indication information to the network device, where the third indication information is used to indicate a processing mode that is for the data packet and that is supported by the user equipment or a processing mode that is for the data packet and that is supported by a service requested by the user equipment.

Optionally, the user equipment further includes a third sending module 204.

The third sending module 204 is configured to send first indication information to the network device, where the first indication information is used to indicate the processing mode that is for the data packet and that is determined by the user equipment.

Optionally, the first sending module 201 includes a generation unit 2011 and an encapsulation unit 2012.

The generation unit 2011 is configured to generate first indication information, where the first indication information is used to indicate the processing mode that is for the data packet and that is determined by the user equipment.

It should be noted that the step of generating the first indication information by the generation unit 2011 is optional. The user equipment may choose to add the first indication information to signaling, or may choose to add the first indication information to resource request information.

In a specific implementation, the first indication information may be at least one of service type information, device type information, data packet encapsulation format information, or function information of the data processing layer.

In a feasible manner, the mode for processing the data packet by the user equipment includes at least one of segmentation of the data packet, concatenation of the data packet, out-of-order transmission of the data packet, or transparent transmission of the data packet.

It should be noted that, this embodiment of the present invention may also be used in direct communication between user equipments. In this case, first user equipment may negotiate with second user equipment about a processing mode in the foregoing manner, to determine a consistent processing mode; or the network device negotiates with each of first user equipment and second user equipment about a processing mode, and the network device selects a consistent processing mode for the first user equipment and the second user equipment. For different processing modes used for a data packet, header information of the data packet is different accordingly. Specifically, encapsulation formats of the data packet are different. An example in which the user equipment serves as a transmit end is specifically used below for description in this embodiment of the present invention. A data packet encapsulation format used when the network device serves as a transmit end is the same as a data packet encapsulation format used when the user equipment serves as a transmit end, and is not described herein again.

The encapsulation unit 2012 is configured to encapsulate the data packet according to the processing mode by adding header information of a data processing layer, where the header information includes the first indication information.

Optionally, after the user equipment determines the processing mode for the data packet, the user equipment generates the first indication information, and adds the first indication information to header information of the data packet sent by the user equipment to the network device, so that the network device determines, according to the first indication information, the mode for processing the data packet by the user equipment. The user equipment encapsulates a data packet according to the processing mode by adding the header information of the data processing layer. The header information includes the first indication information.

In a feasible manner, the mode for processing the data packet by the user equipment may be a transparent transmission mode. The transparent transmission mode herein means that the data processing layer does not support processing of segmentation, concatenation, or out-of-order transmission of the data packet, and only routes the data packet. As shown in FIG. 4, FIG. 4 is a schematic structural diagram in a first processing mode for a data packet. When the user equipment determines that a processing mode at the data processing layer is a transparent transmission mode, the data processing layer directly routes a data packet at an application layer to a PHY layer, and the data packet is transmitted to the network device by using the PHY layer. A process in which the PHY layer processes the data packet may involve processes such as encoding, modulation, and check that are necessary steps in a data packet transmission process. This embodiment imposes no limitation on a mode for processing the data packet at the PHY layer. The data packet at the application layer herein is a data packet that is sent from a protocol layer above the data processing layer to the data processing layer. The data packet may be from the application layer, a TCP layer, or a UDP layer, or may be from a PDCP layer or from a encryption layer above the data processing layer. This is not limited herein.

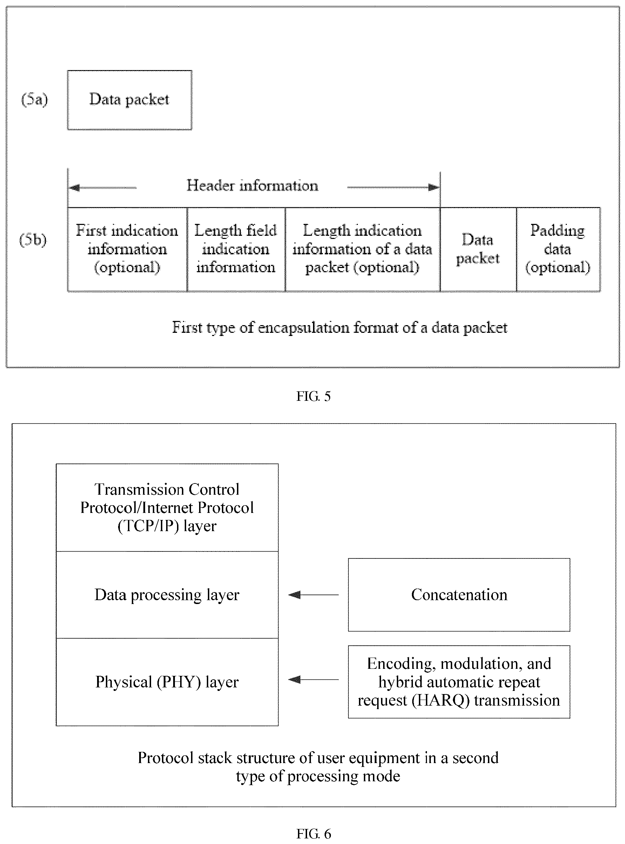

In a specific implementation, as shown in FIG. 5, FIG. 5 is a schematic diagram of a first type of encapsulation format in the first processing mode for a data packet. When the data processing layer does not need to add padding data to a data packet, the first encapsulation format is shown in a schematic structural diagram illustrated by FIG. 5a. The padding data is a data sequence padded by the data processing layer to ensure that a size of the entire data packet meets a data packet size specified by the network device.

When the data processing layer needs to ensure that the size of the data packet meets the data packet size specified by a network device, in a specific implementation, as shown in FIG. 5b, header information of the data packet may include first indication information and length indication information. In FIG. 5b, the length indication information may be used to indicate a length of the data packet, or may be used to indicate a length of padding data.

In a feasible manner, in FIG. 5b, the header information of the data packet may further include length field indication information, to indicate whether the header information includes the length indication information. When the data processing layer does not add padding data to the data packet, the length field indication information indicates that the length indication information is not subsequently carried, and content of the header information is further reduced.

In this embodiment of the present invention, if the user equipment and the network device have determined, by means of negotiation, the processing mode for the data packet before the data packet is sent, so that a transmit end and a receive end can uniquely determine the processing mode for the data packet, or can correctly obtain the processing mode for the data packet by means of an attempt, and the header information of the data packet may not carry the first indication information. Therefore, for various encapsulation formats of a data packet that are described in all the embodiments of this patent, first indication information in header information is not necessary.

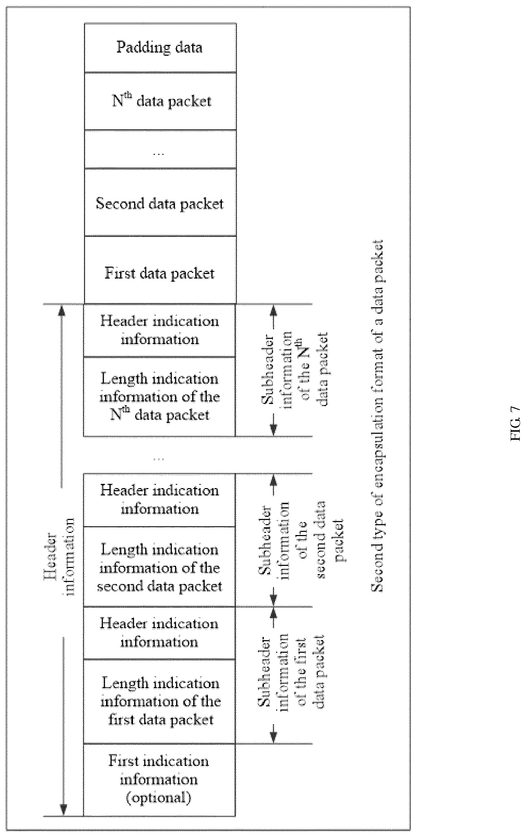

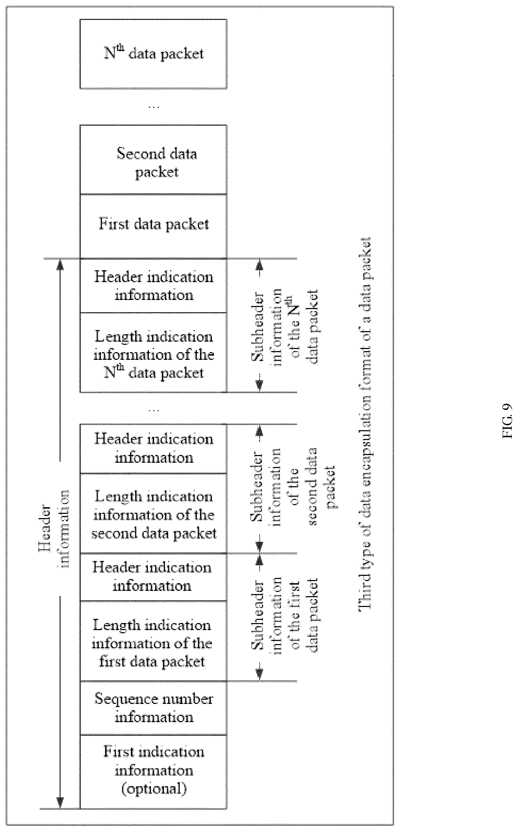

In a specific implementation, when a mode for processing the data packet by the user equipment serving as a transmit end includes only concatenation of the data packet, as shown in FIG. 6, FIG. 6 is a schematic structural diagram of the user equipment in a second processing mode for a data packet. That the data processing layer performs concatenation on data packets means that the data processing layer combines multiple data packets at an application layer to form one data packet at the data processing layer, and transfers the combined data packet at the data processing layer to a PHY layer. Accordingly, a second encapsulation format corresponding to the second processing mode may be shown in FIG. 7. The data processing layer combines multiple data packets at the application layer to form one data packet at the data processing layer. Header information includes first indication information and at least one piece of subheader information. The first subheader information includes length indication information of the first sub-data packet and header indication information of the first sub-data packet, the second subheader information includes length indication information of the second sub-data packet and header indication information of the second sub-data packet, ..., and the N^{th} subheader information includes length indication information of the N^{th} sub-data packet and header indication information of the N^{th} sub-data packet (N^{th} in this embodiment means the last, and N is an integer greater than or equal to 1). The first indication information is used to indicate a mode for processing a data packet by the user equipment, that is, a concatenation operation is performed on the data packet. Length indication information of a data packet is used to indicate a size of the data packet corresponding to a subheader, and header indication information is used to indicate whether a next field is a data packet or subheader information of a next data packet. Preferably, when a data packet obtained after concatenation does not include padding data, the subheader information of the N^{th} sub-data packet does not need to carry the length indication information (for example, in an embodiment of FIG. 9, FIG. 11, FIG. 12, and FIG. 14). In an optional implementation, length field indication information may be further added to a subheader of each data packet, to indicate whether the subheader of the data packet includes length indication information.

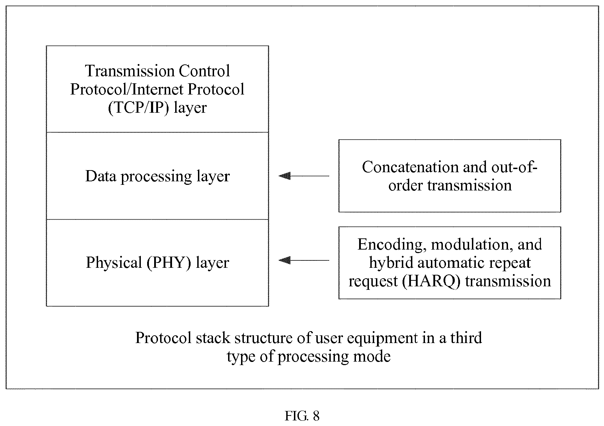

In a specific implementation, a mode for processing the data packet by the user equipment serving as a transmit end includes concatenation and out-of-order transmission of the data packet (in this case, the network device needs to perform reordering when serving as a receive end). Therefore, that the processing mode indicated by the first indication information includes processing of concatenation of the data packet and out-of-order transmission of the data packet is used as an example. As shown in FIG. 8, FIG. 8 is a schematic structural diagram of the user equipment in a third processing mode for a data packet. Therefore, as shown in FIG. 9, based on the header information shown in FIG. 7, sequence number information may be added to the header information of the data packet processed by the data processing layer. The sequence number information is used to indicate numbers of all data packets sent by the user equipment for the first time. The first indication information is used to indicate that the user equipment supports processing modes: concatenation of the data packet and out-of-order transmission of the data packet. When the network device serves as a receive end, sequence number information of data packets is obtained to restore locations of all the data packets. In addition, when the user equipment and the network device support reordering of re-segmented data packets, the user equipment or the network device needs to include a sequence number of each data packet in a subheader of the data packet when the user equipment or the network device serves as a transmit end. For processing of the N^{th} sub-data packet, refer to descriptions of FIG. 7.

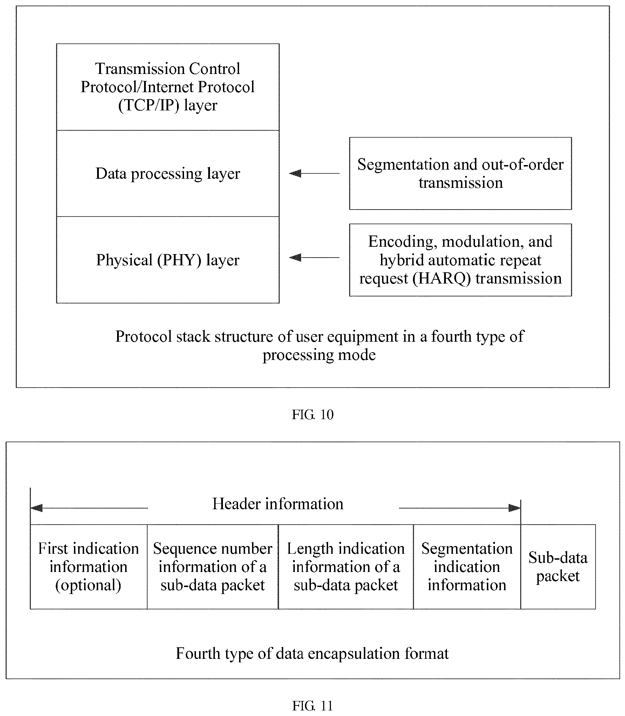

In a specific implementation, a mode for processing the data packet by the user equipment serving as a transmit end includes two types of processing modes: segmentation and out-of-order transmission. As shown in FIG. 10, FIG. 10 is a schematic structural diagram of the user equipment in a fourth processing mode. The data processing layer may support segmentation of the data packet and nonsequential transmission of the data packet such as out-of-order transmission of the data packet to a physical layer. Accordingly, as shown in FIG. 11, FIG. 11 is a schematic structural diagram of a fourth type of encapsulation format used after the data processing layer segments the data packet. Header information of a data packet obtained after processing by the data processing layer includes first indication information (optional), sequence number information of a sub-data packet, length indication information of a sub-data packet (optional), and segmentation indication information. The first indication information is used to indicate that the user equipment supports segmentation of the data packet and out-of-order transmission of the data packet. The sequence number information of the sub-data packet is used to indicate a number that is of the sub-data packet and that is at the data processing layer of the user equipment. The length indication information of the sub-data packet is used to indicate a size of the sub-data packet. The segmentation indication information is used to indicate whether the data packet is segmented, or further indicate a location that is of the sub-data packet and that is in data packets obtained after the data packet that is transferred from the application layer to the data processing layer is segmented, for example, the first sub-data packet, a middle sub-data packet, or the last sub-data packet. Further, the segmentation indication information may be further used to indicate whether the length indication information of the sub-data packet exists. If the segmentation indication information indicates that the sub-data packet is not the last sub-data packet, the length indication information does not need to be included in a header information. Optionally, if a receive end does not require that the data packet needs to meet a fixed size, the length indication information does not need to be included in the header information, either. If the data processing layer supports only a segmentation function, a header field does not include the sequence number information.

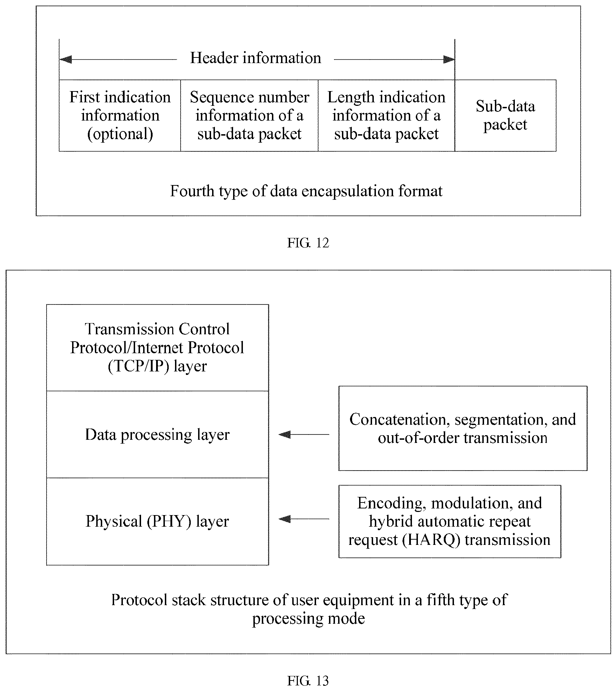

Optionally, because the sequence number information of the sub-data packet has a meaning similar to that of the segmentation indication information, the sequence number information of the sub-data packet and the segmentation indication information may be combined to form sequence number information of the sub-data packet or segmentation indication information. After combination, a structure of the sub-data packet is shown in FIG. 12 (in FIG. 12, the sequence number information of the sub-data packet and the segmentation indication information are combined to form sequence number information of the sub-data packet).

In this embodiment of the present invention, after the user equipment and the network device determine the processing mode for the data packet, it does not indicate that a user processing layer necessarily performs corresponding processing on the data packet. For example, if the user equipment and the network device determine to use the fourth type of processing mode for the data packet, the user equipment segments the data packet only when the data packet is relatively large and a scheduling grant given by the network cannot ensure that the data packet is sent completely at a time; when the data packet is relatively small and a scheduling grant given by the network side can ensure that the data packet is sent completely at a time, the user equipment does not perform a segmentation operation. For out-of-order transmission in the foregoing embodiment, an error of data packet transmission order may be caused only when some data packets need to be retransmitted. The foregoing indication only indicates that the data processing layer can support out-of-order transmission of data packets, but does not indicate that the data processing layer necessarily performs out-of-order transmission on data packets. Disorder at the data processing layer may be caused by disorder at a physical layer. Disorder caused by all reasons is collectively referred to as disorder at the data processing layer herein.

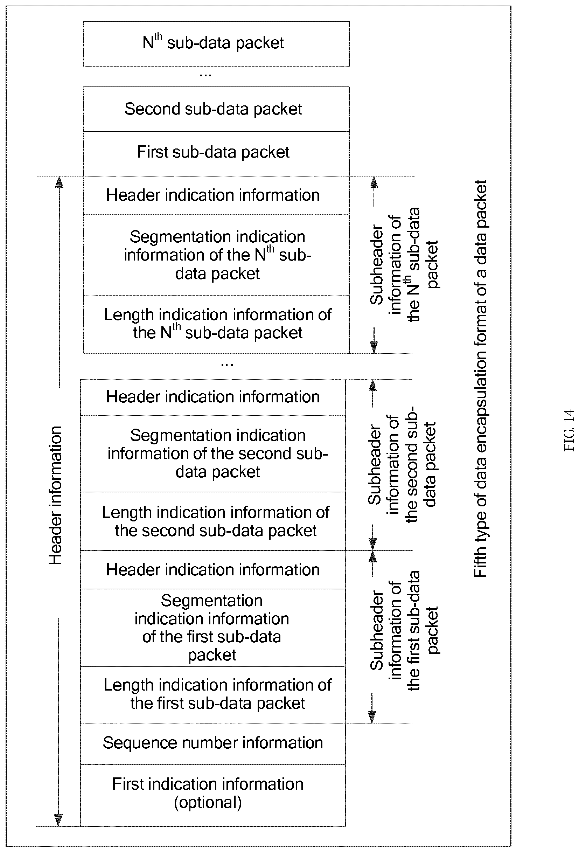

In a specific implementation, a mode for processing the data packet by the user equipment serving as a transmit end includes concatenation, segmentation, and out-of-order transmission of the data packet. As shown in FIG. 13, FIG. 13 is a schematic structural diagram in a fifth processing mode. The processing mode indicated by the first indication information includes: concatenation of the data packet, segmentation of the data packet, and out-of-order transmission of the data packet. Accordingly, as shown in FIG 14, FIG. 14 is a schematic structural diagram of a fifth type of data packet encapsulation format of a data packet. In the processing mode, a data packet obtained after processing by the data processing layer may include the following types:
1. a complete data packet;
2. a sub-data packet obtained after a data packet is segmented;
3. a data packet obtained after concatenation of multiple complete data packets;
4. a data packet obtained after concatenation of a sub-data packet of a current data packet and next multiple complete data packets;
5. a data packet obtained after concatenation of a sub-data packet of a current data packet and a sub-data packet of a next data packet;
6. a data packet obtained after concatenation of a sub-data packet of a current data packet, next multiple complete data packets, and a sub-data packet of a next data packet.

Each sub-data packet is a segmentation block obtained after a complete data packet at an application layer is segmented by the data processing layer, and more than one sub-data packet forms one complete data packet at the application layer.

In order that the receive end can correctly distinguish between all data packets and/or sub-data packets, the data packet encapsulation format shown in FIG. 14 is described.

In FIG. 14, header information of the data packet at the data processing layer includes first indication information, sequence number information, and subheader information of multiple data packets. Subheader information of a sub-data packet may include length indication information of the data packet, segmentation indication information of the data packet, and header indication information. For a detailed function of each piece of information in the header information, refer to related descriptions in embodiments of FIG. 5 to FIG. 12. Details are not described again in this embodiment.

Optionally, because a processing mode of out-of-order transmission performed on the data packet by the data processing layer depends on disorder of data packets caused when a PHY layer sends the data packets in a disorderly and concurrent manner, if the PHY layer transmits a data packet by means of a single process, the data processing layer does not need to use the processing mode of out-of-order transmission for the data packet, and corresponding header information of the data packet does not include sequence number information.

The processing mode provided in this embodiment is only an example. According to different processing modes, there are further other data packet encapsulation formats that are not enumerated herein. In all processing modes, sequence number information is not required in the header information, provided that the data processing layer does not include a function of out-of-order transmission (for example, there is only one HARQ process). In the present invention, only some functions of the data processing layer are enumerated, and a possibility is not excluded that the data processing layer further has other functions, for example, multiplexing of a logical channel and encryption. When a logical channel is multiplexed, only an identifier of a logical channel needs to be added to header information of a data packet or header information of a sub-data packet in the foregoing several processing modes. The data processing layer may also send a control data packet. The foregoing data packet encapsulation format may be used for the control data packet and is indicated by using first indication information or an identifier of a logical channel. Alternatively, different processing modes may be used for data packets or control data packets in different logical channels. This is not limited herein.

After processing the data packet according to the determined processing mode, the user equipment sends the data packet to the network device. In this case, the network device may perform corresponding processing on the data packet according to the mode for processing the data packet by the user equipment, so that the network device correctly parses the data packet.

Optionally, after the network device determines, according to the first indication information, the mode for processing the data packet by the user equipment, the network device may feed acknowledgement information back to the user equipment, and the acknowledgement information is used to acknowledge that the network device processes, by using a processing mode corresponding to the mode for processing the data packet by the user equipment, the data packet sent by the user equipment. This embodiment of the present invention is described by using the user equipment as a transmit end. When the network device serves as a data transmit end, a data packet encapsulation format is the same as an encapsulation format used when the user equipment serves as a transmit end.

By using this embodiment of the present invention, user equipment determines a processing mode for a data packet, and the user equipment processes the data packet according to the determined processing mode, and sends the data packet to a network device. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

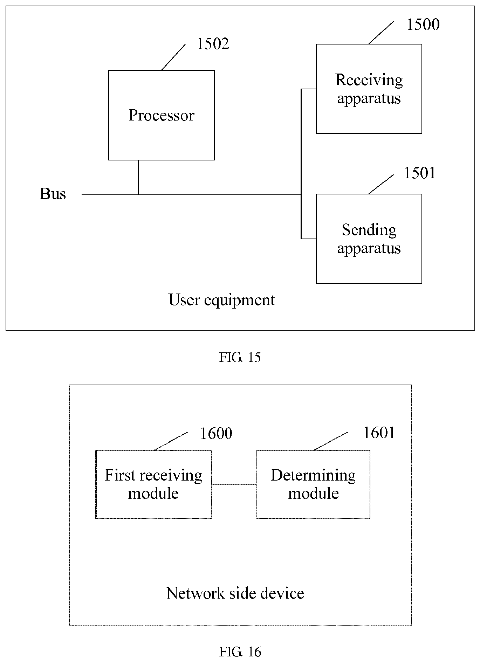

Referring to FIG. 15, FIG. 15 is a schematic structural diagram of another embodiment of user equipment according to an embodiment of the present invention. For specific implementations in FIG. 15, refer to the embodiment of FIG. 2 and the embodiment of FIG. 3. Details are not described again in this embodiment. The user equipment shown in FIG. 15 includes a receiving apparatus 1500, a sending apparatus 1501, and a processor 1502 (the device may include one or more processors, and one processor is used as an example in FIG. 15). In this embodiment of the present invention, the receiving apparatus 1500, the sending apparatus 1501, and the processor 1502 may be connected by using a bus or in another manner. Connection by using a bus is used as an example in FIG. 15.

The processor 1502 is configured to determine a processing mode for a data packet.

The sending apparatus 1501 is configured to: process the data packet according to the determined processing mode, and send the data packet to a network device.

Optionally, when determining the processing mode for the data packet, the processor 1502 specifically performs the following step:
determining the processing mode for the data packet according to at least one of a device type, a service type, a processing mode supported by the user equipment, a user plane function supported by the user equipment, or a processing mode supported by the network device.

Optionally, the receiving apparatus 1500 is configured to receive second indication information sent by the network device, where the second indication information is used to indicate a processing mode that is for the data packet and that is determined by the network device.

The processor 1502 is further configured to determine the processing mode for the data packet according to the received second indication information, where the processing mode determined by the processor 1502 is at least one of the processing mode determined by the network device.

Optionally, the sending apparatus 1501 is further configured to send third indication information to the network device, where the third indication information is used to indicate a processing mode that is for the data packet and that is supported by the user equipment or a processing mode that is for the data packet and that is supported by a service requested by the user equipment.

Optionally, the processing mode for the data packet includes at least one of segmentation of the data packct, concatenation of the data packct, out-of-order transmission of the data packet, or transparent transmission of the data packet.

Optionally, the sending apparatus 1501 is further configured to send first indication information to the network device, where the first indication information is used to indicate the processing mode that is for the data packet and that is determined by the processor 1502.

Optionally, the processor 1502 adds the first indication information to signaling that is sent by the sending apparatus 1501 to the network device; or the processor 1502 adds the first indication information to resource request information that is sent by the sending apparatus 1501 to the network device, where the resource request information is used to request a resource required for sending the data packet by the user equipment.

Optionally, when processing the data packet according to the determined processing mode, the processor 1502 specifically performs the following steps:
generating first indication information, where the first indication information is used to indicate the processing mode that is for the data packet and that is determined by the processor 1502; and
encapsulating the data packet according to the processing mode by adding header information of a data processing layer, where the header information includes the first indication information.

Optionally, the first indication information is at least one of service type information, device type information, function information of the data processing layer, or data packet encapsulation format information.

Optionally, if the processing mode for the data packet includes concatenation of the data packet, the header information further includes header indication information, and the header indication information is used to indicate that the next field is a data packet, or that a next field is subheader information of the data packet; or if the processing mode for the data packet includes out-of-order transmission of the data packet, the header information further includes sequence number information, and the sequence number information is used to indicate a number that is of the data packet and that is at the data processing layer; or if the processing mode for the data packet includes segmentation of the data packet, the header information further includes segmentation indication information, the segmentation indication information is used to indicate whether the data packet is segmented, and a

Optionally, the header information further includes length indication information, and the length indication information is used to indicate a length of the data packet corresponding to the header information or a length of a sub-data packet corresponding to the subheader information; or the header information further includes length field indication information and length indication information, and the length field indication information is used to indicate that the header information or the subheader information includes the length indication information.

By using this embodiment of the present invention, user equipment determines a processing mode for a data packet, and the user equipment processes the data packet according to the determined processing mode, and sends the data packet to a network device. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

Referring to FIG. 16, FIG. 16 is a schematic structural diagram of an embodiment of a network device according to an embodiment of the present invention. The network device shown in FIG. 16 includes a first receiving module 1600 and a determining module 1601.

The first receiving module 1600 is configured to receive a data packet sent by user equipment, where the data packet is obtained after the user equipment processes a data packet according to a determined processing mode.

In a specific implementation, the user equipment determines the processing mode for the data packet according to at least one of a device type, a service type, a processing mode supported by the user equipment, a user plane function supported by the user equipment, or a processing mode supported by the network device. The processing mode includes at least one of concatenation of the data packet, segmentation of the data packet, out-of-order transmission of the data packet, or transparent transmission of the data packet. For example, the service type may include parameters such as a size of a service data packet, an arrival time interval between service data packets, and a transmission delay requirement for a service data packet. By using the service type as an example, for a service of transmitting continuous small data packets, the user equipment performs only concatenation on the data packets, and for a service of a meter reading type (a data packet in this type of service is relatively small, and a transmission interval between data packets is large), the user equipment performs no processing at a data processing layer. Therefore, the user equipment first needs to determine the processing mode for the data packet. After the user equipment determines the processing mode for the data packet, when the user equipment sends the data packet to the network device, an encapsulation format of the data packet or content of header information of the data packet is corresponding to the processing mode.

In a specific implementation, the user equipment may support only an undiversified service type. For example, a smart meter supports only a meter reading service. Therefore, a processing mode of the user equipment is fixed. In this case, the user equipment directly determines the processing mode according to a device type.

It should be noted that the processing mode herein may be replaced with a data packet encapsulation format, a function of the data processing layer, or the like, to uniquely determine processing for the data packet.

The determining module 1601 is configured to determine the processing mode for the data packet.

In a specific implementation, after processing the data packet according to the determined processing mode, the user equipment sends the data packet to the network device. In this case, the network device may perform corresponding processing on the received data packet according to the mode for processing the data packet by the user equipment, so that processing performed by the network device is corresponding to that performed by the user equipment. For example, after the user equipment segments a data packet, the network device needs to combine segmented data packets. Alternatively, after the user equipment performs concatenation on a data packet, the network device needs to decompose a received data packet obtained after the concatenation, to obtain the data packet existing before the concatenation. Alternatively, when data packets are out of order during transmission performed by the user equipment, the network device needs to perform reordering processing on the received data packets.

In a feasible manner, before the first receiving module 1600 receives the data packet sent by the user equipment, the user equipment may receive second indication information sent by the network device. The second indication information is used to indicate the processing mode that is for the data packet and that is determined by the network device. For example, the second indication information may specifically indicate that: the data processing layer may perform at least one of concatenation of the data packet, segmentation of the data packet, out-of-order transmission of the data packet, or transparent transmission of the data packet. Transparent transmission of the data packet may be indicated in the following manner: The second indication information indicates that none of segmentation, concatenation, and out-of-order transmission of the data packet is supported. If the second indication information given by the network device indicates only one type of processing mode, the user equipment uses the processing mode specified by the network device. The user equipment processes the data packet according to the processing mode specified by the network device, and sends a processed data packet to the network device. The data packet does not need to carry indication information (such as first indication information in the following) of the processing mode for the data packet.

In a feasible manner, after the user equipment determines the mode for processing the data packet by the user equipment, the user equipment sends the first indication information to the network device, so that the network device determines, according to the first indication information, the mode for processing the data packet by the user equipment. The first indication information herein may include at least one of service type information, device type information, data packet encapsulation format information, or function information of the data processing layer. The service type information is a type of a service corresponding to a data packet transmitted between the user equipment and the network device, for example, a streaming media service, a low delay service, or a background service. The function information of the data processing layer includes at least one of segmentation of the data packet, concatenation of the data packet, out-of-order transmission of the data packet, reordering of the data packet, or transparent transmission of the data packet. Transparent transmission means that the data processing layer does not support any function of segmentation, concatenation, or out-of-order transmission.

Optionally, after the network device determines, according to the first indication information, the mode for processing the data packet by the user equipment, the network device may feed acknowledgement information back to the user equipment, and the acknowledgement information is used to acknowledge whether the network device agrees to use a processing mode corresponding to the processing mode selected by the user equipment.

In a feasible manner, this embodiment of the present invention imposes no limitation on a sequence of the step performed by the first receiving module 1600 and the step performed by the determining module 1601. That is, the step performed by the determining module 1601 may be after the step performed by the first receiving module 1600, or the step performed by the determining module 1601 may be before the step performed by the first receiving module 1600.

Optionally, if the step performed by the determining module 1601 is after the step performed by the first receiving module 1600, the user equipment adds the first indication information to the header information of the data packet sent by the user equipment to the network device.

In a specific implementation, when sending the data packet to the network device, the user equipment may add the first indication information to the header information of the data packet. The first indication information is used to indicate the mode for processing the data packet by the user equipment. After receiving the data packet sent by the user equipment, the network device obtains, by parsing the header information, the mode for processing the data packet by the user equipment.

Optionally, if the step performed by the determining module 1601 is before the step performed by the first receiving module 1600, the network device receives the first indication information sent by the user equipment. The first indication information is used to indicate the processing mode that is for the data packet and that is determined by the user equipment.

In a specific implementation, the network device receives the first indication information from signaling that is sent by the user equipment to the network device. Optionally, the signaling sent by the user equipment to the network device may be non-access stratum (NAS) signaling or radio resource control (RRC) signaling.

In a feasible manner, the signaling sent by the user equipment to the network device may be used to request establishment of a service.

In a feasible manner, if the user equipment chooses to add the first indication information to the signaling, when sending the data packet to the network device, the user equipment no longer needs to add the first indication information to the header information of the data packet.

In a feasible manner, the network device receives the first indication information from resource request information that is sent by the user equipment to the network device. The resource request information is used to request a resource required for sending the data packet by the user equipment.

In a specific implementation, when requesting, from the network device, the resource required for sending the data packet, the user equipment notifies the network device of the processing mode that is for the data packet and that is determined by the user equipment. Specifically, the user equipment may add the first indication information to the resource request information. For example, the resource request information may be one or more of random access sequence information, random access time information, or random access frequency information, and each of the random access sequence information, the random access time information, and the random access frequency information may be the first indication information.

Optionally, if the user equipment chooses to add the first indication information to the resource request information, when sending the data packet to the network device, the user equipment no longer needs to add the first indication information to the header information of the data packet.

It should be noted that the processing mode determined in this embodiment of the present invention may be only a processing mode used when the user equipment serves as a transmit end, or may be only a processing mode used when the user equipment serves as a receive end, or may be a common processing mode used when the user equipment serves as both a transmit end and a receive end. This is not limited herein. In addition, the processing mode determined in this embodiment may be used for a service or a bearer of the user equipment, or may be used for all services or all bearers of the user equipment.

By using this embodiment of the present invention, a network device receives a data packet sent by user equipment, where the data packet is obtained after the user equipment processes a data packet according to a determined processing mode, and the network device determines the processing mode for the data packet. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

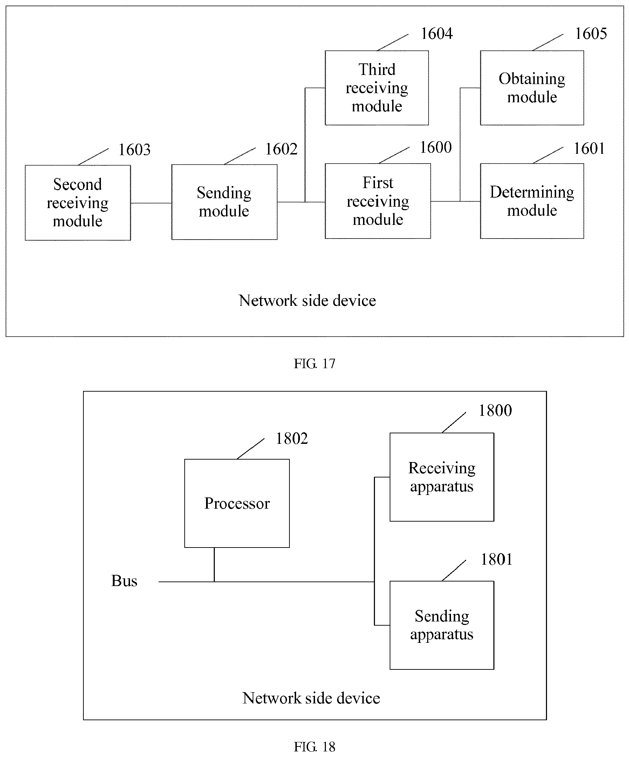

Referring to FIG. 17, FIG. 17 is a schematic structural diagram of another embodiment of a network device according to an embodiment of the present invention. The network device shown in FIG. 17 is further described based on the embodiment of FIG. 16.

The network device shown in FIG. 17 includes a first receiving module 1600 and a determining module 1601.

The first receiving module 1600 is configured to receive a data packet sent by user equipment, where the data packet is obtained after the user equipment processes a data packet according to a determined processing mode.

The determining module 1601 is configured to determine the processing mode for the data packet.

Optionally, the network device further includes a sending module 1602.

The sending module 1602 is configured to send second indication information to the user equipment, where the second indication information is used to indicate the processing mode that is for the data packet and that is determined by the determining module 1601, so that the user equipment determines, according to the received second indication information, the mode for processing the data packet by the user equipment, and the processing mode determined by the user equipment is at least one of the processing mode determined by the network device.

Optionally, before the sending module 1602 sends the second indication information to the user equipment, the network device may receive third indication information sent by the user equipment. The third indication information is used to indicate a processing mode that is for the data packet and that is supported by the user equipment. The third indication information may specifically include a function of a data processing layer, a data packet encapsulation format, a number of a processing mode, and the like. Preferably, the third indication information, a service type and a device type of the user equipment, and the like are sent to the network device in same signaling, or a service type of the user equipment or a device type of the user equipment or both also belongs to a type of third indication information. After receiving the third indication information sent by the user equipment, the network device determines, from the obtained processing mode that is for the data packet and that is supported by the user equipment, a mode for processing the data packet by the network device that is corresponding to that for processing the data packet by the user equipment.

In a feasible manner, a processing mode of a transmit end may mean that the transmit end supports at least one of concatenation of the data packet, segmentation of a data packet, out-of-order transmission of a data packet, or transparent transmission of a data packet. Correspondingly, a processing mode of a receive end may be at least one of decomposition of a data packet obtained after concatenation, combination of segmented data packets, reordering of data packets, or transparent transmission of a data packet.

In a feasible manner, transparent transmission at the data processing layer means that the data processing layer does not support any processing of segmentation, concatenation, or out-of-order transmission of a data packet. That is, the data processing layer directly delivers a data packet at an application layer to a bottom layer.

In a specific implementation, the second indication information sent by the network device may indicate the processing mode that is for the data packet and that is determined by the network device. For example, the second indication information may specifically indicate that: The data processing layer may perform at least one of concatenation of the data packet, segmentation of the data packet, out-of-order transmission of the data packet, or transparent transmission of the data packet. Transparent transmission of the data packet may be indicated in the following manner: The second indication information indicates that none of segmentation, concatenation, and out-of-order transmission of the data packet is supported.

It should be noted that out-of-order transmission performed by the transmit end is corresponding to a reordering function of the receive end. This specifically means that the receive end may support out-of-order receiving, and further perform reordering on data packets according to sequence numbers. Generally, because data packets may be out of order when the transmit end performs out-of-order transmission or supports retransmission at the data processing layer, a data packet that is earlier initially transmitted reaches the receive end later than a data packet that is later initially transmitted.

Optionally, the second indication information may indicate that different processing modes may be used. That is, the transmit end may use different processing modes according to a requirement, and indicate a processing mode specific to a data packet in header information of the data packet. The indication manner is in particular applicable to user equipment with multiple services.

In a specific implementation, the user equipment may determine, according to the second indication information from the processing mode that is for the data packet and that is determined by the network device, the mode for processing the data packet by the user equipment. The processing mode determined by the user equipment is at least one of the processing mode determined by the network device. For example, if the second indication information given by the network device indicates only one type of processing mode, the user equipment uses the processing mode specified by the network device. If the second indication information indicates multiple types of processing modes, the user equipment may select at least one type of processing mode from the multiple types of processing modes indicated by the second indication information, and indicate the processing mode to the network device.

Optionally, the network device further includes a second receiving module 1603.

The second receiving module 1603 is configured to receive third indication information sent by the user equipment, where the third indication information is used to indicate a processing mode that is for the data packet and that is supported by the user equipment or a processing mode that is for the data packet and that is supported by a service requested by the user equipment.

Optionally, the processing mode for the data packet includes at least one of segmentation of the data packet, concatenation of the data packet, out-of-order transmission of the data packet, or transparent transmission of the data packet.

Optionally, the network device further includes a third receiving module 1604.

The third receiving module 1604 is configured to receive first indication information sent by the user equipment, where the first indication information is used to indicate the processing mode that is for the data packet and that is determined by the user equipment.

Optionally, the third receiving module 1604 receives the first indication information from signaling that is sent by the user equipment to the network device; or the third receiving module 1604 receives the first indication information from resource request information that is sent by the user equipment to the network device, where the resource request information is used to request a resource required for sending the data packet by the user equipment.

Optionally, the network device further includes an obtaining module 1605.

The obtaining module 1605 is configured to obtain first indication information according to the received data packet, where the first indication information is used to indicate the processing mode that is for the data packet and that is determined by the user equipment, the received data packet is obtained after the user equipment encapsulates a data packet according to the processing mode by adding header information of a data processing layer, and the header information includes the first indication information.

In a specific implementation, the first indication information may be at least one of service type information, device type information, data packet encapsulation format information, or function information of the data processing layer.

In a feasible manner, the mode for processing the data packet by the user equipment includes at least one of segmentation of the data packet, concatenation of the data packet, out-of-order transmission of the data packet, or transparent transmission of the data packet.

It should be noted that, this embodiment of the present invention may also be used in direct communication between user equipments. In this case, first user equipment may negotiate with second user equipment about a processing mode in the foregoing manner, to determine a consistent processing mode; or the network device negotiates with each of first user equipment and second user equipment about a processing mode, and the network device selects a consistent processing mode for the first user equipment and the second user equipment. For different processing modes used for a data packet, header information of the data packet is different accordingly. Specifically, encapsulation formats of the data packet are different. An example in which the user equipment serves as a transmit end is specifically used below for description in this embodiment of the present invention. A data packet encapsulation format used when the network device serves as a transmit end is the same as a data packet encapsulation format used when the user equipment serves as a transmit end, and is not described herein again. In addition, for a processing mode for the data packet, refer to the embodiment of FIG. 2 and the embodiment of FIG. 3. Details are not described again in this embodiment.

Optionally, the first indication information is at least one of service type information, device type information, function information of the data processing layer, or data packet encapsulation format information.

Optionally, if the processing mode for the data packet includes concatenation of the data packet, the header information further includes header indication information, and the header indication information is used to indicate that the next field is a data packet, or that a next field is subheader information of the data packet; or if the processing mode for the data packet includes out-of-order transmission of the data packet, the header information further includes sequence number information, and the sequence number information is used to indicate a number that is of the data packet and that is at the data processing layer; or if the processing mode for the data packet includes segmentation of the data packet, the header information further includes segmentation indication information, the segmentation indication information is used to indicate whether the data packet is segmented, and a sub-data packet is a segmented data packet.

Optionally, the header information further includes length indication information, and the length indication information is used to indicate a length of the data packet corresponding to the header information or a length of a sub-data packet corresponding to the subheader information; or the header information further includes length field indication information and length indication information, and the length field indication information is used to indicate that the header information or the subheader information includes the length indication information.

By using this embodiment of the present invention, a network device receives a data packet sent by user equipment, where the data packet is obtained after the user equipment processes a data packet according to a determined processing mode, and the network device determines the processing mode for the data packet. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

Referring to FIG. 18, FIG. 18 is a schematic structural diagram of another embodiment of a network device according to an embodiment of the present invention. For specific implementations in FIG. 18, refer to the embodiment of FIG. 16 and the embodiment of FIG. 17. Details are not described again in this embodiment. The network device shown in FIG. 18 includes a receiving apparatus 1800, a sending apparatus 1801, and a processor 1802 (the device may include one or more processors 1802, and one processor is used as an example in FIG. 18). In this embodiment of the present invention, the receiving apparatus 1800, the sending apparatus 1801, and the processor 1802 may be connected by using a bus or in another manner. Connection by using a bus is used as an example in FIG. 18.

The receiving apparatus 1800 is configured to receive a data packet sent by user equipment, where the data packet is obtained after the user equipment processes a data packet according to a determined processing mode.

The processor 1802 is configured to determine the processing mode for the data packet.

Optionally, the user equipment determines the processing mode for the data packet according to at least one of a device type, a service type, a processing mode supported by the user equipment, a user plane function supported by the user equipment, or a processing mode supported by the network device.

Optionally, the sending apparatus 1801 is configured to send second indication information to the user equipment, where the second indication information is used to indicate the processing mode that is for the data packet and that is determined by the processor 1802, so that the user equipment determines, according to the received second indication information, the mode for processing the data packet by the user equipment, and the processing mode determined by the user equipment is at least one of the processing mode determined by the network device.

Optionally, the receiving apparatus 1800 is further configured to receive third indication information sent by the user equipment, where the third indication information is used to indicate a processing mode that is for the data packet and that is supported by the user equipment or a processing mode that is for the data packet and that is supported by a service requested by the user equipment.

Optionally, the processing mode for the data packet includes at least one of segmentation of the data packet, concatenation of the data packet, out-of-order transmission of the data packet, or transparent transmission of the data packet.

Optionally, the receiving apparatus 1800 is further configured to receive first indication information sent by the user equipment, where the first indication information is used to indicate the processing mode that is for the data packet and that is determined by the user equipment.

Optionally, the receiving apparatus 1800 receives the first indication information from signaling that is sent by the user equipment to the network device; or the receiving apparatus 1800 receives the first indication information from resource request information that is sent by the user equipment to the network device, where the resource request information is used to request a resource required for sending the data packet by the user equipment.

Optionally, the receiving apparatus 1800 obtains first indication information according to the received data packet, where the first indication information is used to indicate the processing mode that is for the data packet and that is determined by the user equipment, the received data packet is obtained after the user equipment encapsulates a data packet according to the processing mode by adding header information of a data processing layer, and the header information includes the first indication information.

Optionally, the first indication information is at least one of service type information, device type information, function information of the data processing layer, or data packet encapsulation format information.

Optionally, if the processing mode for the data packet includes concatenation of the data packet, the header information further includes header indication information, and the header indication information is used to indicate that the next field is a data packet, or that a next field is subheader information of the data packet; or if the processing mode for the data packet includes out-of-order transmission of the data packet, the header information further includes sequence number information, and the sequence number information is used to indicate a number that is of the data packet and that is at the data processing layer; or if the processing mode for the data packet includes segmentation of the data packet, the header information further includes segmentation indication information, the segmentation indication information is used to indicate whether the data packet is segmented, and a sub-data packet is a segmented data packet.

Optionally, the header information further includes length indication information, and the length indication information is used to indicate a length of the data packet corresponding to the header information or a length of a sub-data packet corresponding to the subheader information; or the header information further includes length field indication information and length indication information, and the length field indication information is used to indicate that the header information or the subheader information includes the length indication information.

By using this embodiment of the present invention, a network device receives a data packet sent by user equipment, where the data packet is obtained after the user equipment processes a data packet according to a determined processing mode, and the network device determines the processing mode for the data packet. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

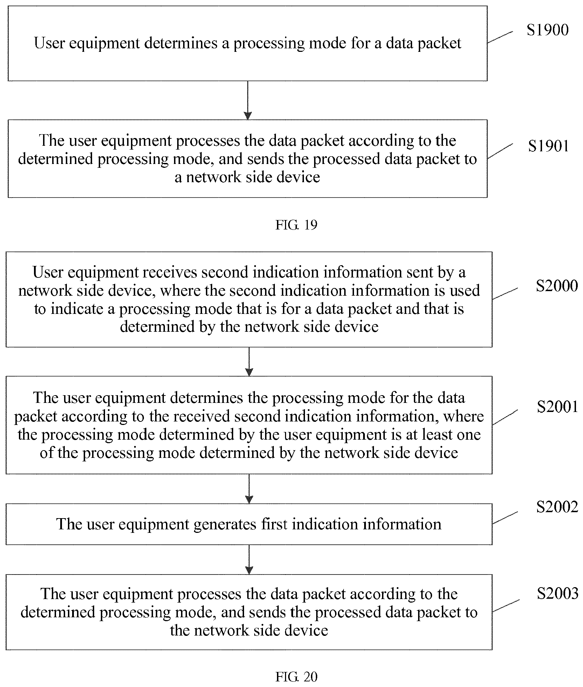

Referring to FIG. 19, FIG. 19 is a schematic flowchart of an embodiment of a method for determining a processing mode for a data packet according to an embodiment of the present invention.

As shown in FIG. 19, the method for determining a processing mode for a data packet in this embodiment of the present invention may include the following steps.

S1900. User equipment determines a processing mode for a data packet.

In a specific implementation, the user equipment determines the processing mode for the data packet according to at least one of a device type, a service type, a processing mode supported by the user equipment, a user plane function supported by the user equipment, or a processing mode indicated by a network device. The processing mode includes at least one of concatenation of the data packet, segmentation of the data packet, out-of-order transmission of the data packet, or transparent transmission of the data packet. For example, the service type may include parameters such as a size of a service data packet, an arrival time interval between service data packets, and a transmission delay requirement for a service data packet. By using the service type as an example, for a service of transmitting continuous small data packets, the user equipment performs only concatenation on the data packets, and for a service of a meter reading type (a data packet in this type of service is relatively small, and a transmission interval between data packets is large), the user equipment performs no processing at a data processing layer. Therefore, the user equipment first needs to determine the processing mode for the data packet. After the user equipment determines the processing mode for the data packet, when the user equipment sends the data packet to the network device, an encapsulation format of the data packet or content of header information of the data packet is corresponding to the processing mode.

In a specific implementation, the user equipment may support only an undiversified service type. For example, a smart meter supports only a meter reading service. Therefore, a processing mode of the user equipment is fixed. In this case, the user equipment directly determines the processing mode according to a device type.

It should be noted that the processing mode herein may be replaced with a data packet encapsulation format, a function of the data processing layer, or the like, to uniquely determine processing for the data packet.

S1901. The user equipment processes the data packet according to the determined processing mode, and sends the data packet to a network device.

In a specific implementation, when both the user equipment and the network device determine the processing mode for the data packet, in a data transmission process, after the user equipment processes the data packet according to the determined processing mode, the user equipment sends the data packet to the network device. In this case, the network device may perform corresponding processing on the received data packet according to the mode for processing the data packet by the user equipment, so that processing performed by the network device is corresponding to that performed by the user equipment. For example, after the user equipment segments a data packet, the network device needs to combine segmented data packets. Alternatively, after the user equipment performs concatenation on a data packet, the network device needs to decompose a received data packet obtained after the concatenation, to obtain the data packet existing before the concatenation. Alternatively, when data packets are out of order during transmission performed by the user equipment, the network device needs to perform reordering processing on the received data packets.

In a feasible manner, before step S1900, the user equipment may receive second indication information sent by the network device. The second indication information is used to indicate a processing mode that is for the data packet and that is determined by the network device. For example, the second indication information may specifically indicate that: The data processing layer may perform at least one of concatenation of the data packet, segmentation of the data packet, out-of-order transmission of the data packet, or transparent transmission of the data packet. Transparent transmission of the data packet may be indicated in the following manner: The second indication information indicates that none of segmentation, concatenation, and out-of-order transmission of the data packet is supported. If the second indication information given by the network device indicates only one type of processing mode, the user equipment uses the processing mode specified by the network device. The user equipment processes the data packet according to the processing mode specified by the network device, and sends a processed data packet to the network device. The data packet does not need to carry indication information (such as first indication information in the following) of the processing mode for the data packet.

In a feasible manner, after the user equipment determines the mode for processing the data packet by the user equipment, the user equipment sends the first indication information to the network device, so that the network device determines, according to the first indication information, the mode for processing the data packet by the user equipment. The first indication information herein may include at least one of service type information, device type information, data packet encapsulation format information, or function information of the data processing layer. The service type information is a type of a service corresponding to a data packet transmitted between the user equipment and the network device, for example, a streaming media service, a low delay service, or a background service. The function information of the data processing layer includes at least one of segmentation of the data packet, concatenation of the data packet, out-of-order transmission of the data packet, reordering of the data packet, or transparent transmission of the data packet. Transparent transmission means that the data processing layer does not support any function of segmentation, concatenation, or out-of-order transmission.

Optionally, after the network device determines, according to the first indication information, the mode for processing the data packet by the user equipment, the network device may feed acknowledgement information back to the user equipment, and the acknowledgement information is used to acknowledge whether the network device agrees to use a processing mode corresponding to the processing mode selected by the user equipment.

In a feasible manner, the user equipment adds the first indication information to the header information of the data packet sent by the user equipment to the network device.

In a specific implementation, when sending the data packet to the network device, the user equipment may add the first indication information to the header information of the data packet. The first indication information is used to indicate the mode for processing the data packet by the user equipment. After receiving the data packet sent by the user equipment, the network device obtains, by parsing the header information, the mode for processing the data packet by the user equipment.

In a feasible manner, the user equipment adds the first indication information to signaling that is sent by the user equipment to the network device. Optionally, the signaling sent by the user equipment to the network device may be non-access stratum (NAS) signaling or radio resource control (RRC) signaling.

Optionally, the signaling sent by the user equipment to the network device may be used to request establishment of a service.

Optionally, if the user equipment chooses to add the first indication information to the signaling, when sending the data packet to the network device, the user equipment no longer needs to add the first indication information to the header information of the data packet.

In a feasible manner, the user equipment adds the first indication information to resource request information that is sent by the user equipment to the network device. The resource request information is used to request a resource required for sending the data packet by the user equipment.

In a specific implementation, when requesting, from the network device, the resource required for sending the data packet, the user equipment notifies the network device of the processing mode that is for the data packet and that is determined by the user equipment. Specifically, the user equipment may add the first indication information to the resource request information. For example, the resource request information may be one or more of random access sequence information, random access time information, or random access frequency information, and each of the random access sequence information, the random access time information, and the random access frequency information may be the first indication information.

Optionally, if the user equipment chooses to add the first indication information to the resource request information, when sending the data packet to the network device, the user equipment no longer needs to add the first indication information to the header information of the data packet.

It should be noted that the processing mode determined in this embodiment of the present invention may be only a processing mode used when the user equipment serves as a transmit end, or may be only a processing mode used when the user equipment serves as a receive end, or may be a common processing mode used when the user equipment serves as both a transmit end and a receive end. This is not limited herein. In addition, the processing mode determined in this embodiment may be used for a service or a bearer of the user equipment, or may be used for all services or all bearers of the user equipment.

By using this embodiment of the present invention, user equipment determines a processing mode for a data packet, and the user equipment processes the data packet according to the determined processing mode, and sends the data packet to a network device. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

Referring to FIG. 20, FIG. 20 is a schematic flowchart of another embodiment of a method for determining a processing mode for a data packet according to an embodiment of the present invention. In this embodiment of the present invention, an example in which user equipment serves as a transmit end, and a network device serves as a receive end is used for description. A processing mode of the receive end and a processing mode of the transmit end are corresponding to each other. Either of the user equipment and the network device can be a receive end or a transmit end, or can be both a transmit end and a receive end.

As shown in FIG. 20, the method for determining a processing mode for a data packet in this embodiment of the present invention may include the following steps.

S2000. The user equipment receives second indication information sent by the network device, where the second indication information is used to indicate a processing mode that is for a data packet and that is determined by the network device.

Optionally, before step S2000, the network device may receive third indication information sent by the user equipment. The third indication information is used to indicate a processing mode that is for the data packet and that is supported by the user equipment. The third indication information may specifically include a function of a data processing layer, a data packet encapsulation format, a number of a processing mode, and the like. Preferably, the third indication information, a service type and a device type of the user equipment, and the like are sent to the network device in same signaling, or a service type of the user equipment or a device type of the user equipment or both also belongs to a type of third indication information. After receiving the third indication information sent by the user equipment, the network device determines, from the obtained processing mode that is for the data packet and that is supported by the user equipment, a mode for processing the data packet by the network device that is corresponding to that for processing the data packet by the user equipment.

In a feasible manner, a processing mode of a transmit end may mean that the transmit end supports at least one of concatenation of the data packet, segmentation of a data packet, out-of-order transmission of a data packet, or transparent transmission of a data packet. Correspondingly, a processing mode of a receive end may be at least one of decomposition of a data packet obtained after concatenation, combination of segmented data packets, reordering of data packets, or transparent transmission of a data packet.

In a feasible manner, transparent transmission at the data processing layer means that the data processing layer does not support any processing of segmentation, concatenation, or out-of-order transmission of a data packet. That is, the data processing layer directly delivers a data packet at an application layer to a bottom layer.

S2001. The user equipment determines the processing mode for the data packet according to the received second indication information, where the processing mode determined by the user equipment is at least one of the processing mode determined by the network device.

In a specific implementation, the second indication information sent by the network device may indicate the processing mode that is for the data packet and that is determined by the network device. For example, the second indication information may specifically indicate that: The data processing layer may perform at least one of concatenation of the data packet, segmentation of the data packet, out-of-order transmission of the data packet, or transparent transmission of the data packet. Transparent transmission of the data packet may be indicated in the following manner: The second indication information indicates that none of segmentation, concatenation, and out-of-order transmission of the data packet is supported.

It should be noted that out-of-order transmission performed by the transmit end is corresponding to a reordering function of the receive end. This specifically means that the receive end may support out-of-order receiving, and further perform reordering on data packets according to sequence numbers. Generally, because data packets may be out of order when the transmit end performs out-of-order transmission or supports retransmission at the data processing layer, a data packet that is earlier initially transmitted reaches the receive end later than a data packet that is later initially transmitted.

Optionally, the second indication information may indicate that different processing modes may be used. That is, the transmit end may use different processing modes according to a requirement, and indicate a processing mode specific to a data packet in header information of the data packet. The indication manner is in particular applicable to user equipment with multiple services.

In a specific implementation, the user equipment may determine, according to the second indication information from the processing mode that is for the data packet and that is determined by the network device, the mode for processing the data packet by the user equipment. The processing mode determined by the user equipment is at least one of the processing mode determined by the network device. For example, if the second indication information given in S2000 includes only one type of processing mode, the user equipment uses the processing mode specified by the network device. If the second indication information in S2000 indicates multiple types of processing modes, the user equipment may select at least one type of processing mode from the multiple types of processing modes indicated by the second indication information, and indicate the processing mode to the network device.

S2002. The user equipment generates first indication information.

It should be noted that step S2002 is optional. The user equipment may choose to add the first indication information to signaling, or may choose to add the first indication information to resource request information.

In a specific implementation, the first indication information may be at least one of service type information, device type information, data packet encapsulation format information, or function information of the data processing layer.

In a feasible manner, the mode for processing the data packet by the user equipment includes at least one of segmentation of the data packet, concatenation of the data packet, out-of-order transmission of the data packet, or transparent transmission of the data packet.

It should be noted that, this embodiment of the present invention may also be used in direct communication between user equipments. In this case, first user equipment may negotiate with second user equipment about a processing mode in the foregoing manner, to determine a consistent processing mode; or the network device negotiates with each of first user equipment and second user equipment about a processing mode, and the network device selects a consistent processing mode for the first user equipment and the second user equipment. For different processing modes used for a data packet, header information of the data packet is different accordingly. Specifically, encapsulation formats of the data packet are different. An example in which the user equipment serves as a transmit end is specifically used below for description in this embodiment of the present invention. A data packet encapsulation format used when the network device serves as a transmit end is the same as a data packet encapsulation format used when the user equipment serves as a transmit end, and is not described herein again.

S2003. The user equipment processes the data packet according to the determined processing mode, and sends the data packet to the network device.

Optionally, after the user equipment determines the processing mode for the data packet, the user equipment generates the first indication information, and adds the first indication information to header information of the data packet sent by the user equipment to the network device, so that the network device determines, according to the first indication information, the mode for processing the data packet by the user equipment. The user equipment encapsulates a data packet according to the processing mode by adding header information of the data processing layer. The header information includes the first indication information.

In a feasible manner, the mode for processing the data packet by the user equipment may be a transparent transmission mode. The transparent transmission mode herein means that the data processing layer does not support processing of segmentation, concatenation, or out-of-order transmission of the data packet, and only routes the data packet. As shown in FIG. 4, FIG. 4 is a schematic structural diagram in a first processing mode for a data packet. When the user equipment determines that a processing mode at the data processing layer is a transparent transmission mode, the data processing layer directly routes a data packet at an application layer to a PHY layer, and the data packet is transmitted to the network device by using the PHY layer. A process in which the PHY layer processes the data packet may involve processes such as encoding, modulation, and check that are necessary steps in a data packet transmission process. This embodiment imposes no limitation on a mode for processing the data packet at the PHY layer. The data packet at the application layer herein is a data packet that is sent from a protocol layer above the data processing layer to the data processing layer. The data packet may be from the application layer, a TCP layer, or a UDP layer, or may be from a PDCP layer or from a encryption layer above the data processing layer. This is not limited herein.

In a specific implementation, as shown in FIG. 5, FIG. 5 is a schematic diagram of a first type of encapsulation format in the first processing mode for a data packet. When the data processing layer does not need to add padding data to a data packet, the first encapsulation format is shown in a schematic structural diagram illustrated by FIG. 5a. The padding data is a data sequence padded by the data processing layer to ensure that a size of the entire data packet meets a data packet size specified by the network device.

When the data processing layer needs to ensure that the size of the data packet meets the data packet size specified by a network device, in a specific implementation, as shown in FIG. 5b, header information of the data packet may include first indication information and length indication information. In FIG. 5b, the length indication information may be used to indicate a length of the data packet, or may be used to indicate a length of padding data.

In a feasible manner, in FIG. 5b, the header information of the data packet may further include length field indication information, to indicate whether the header information includes the length indication information. When the data processing layer does not add padding data to the data packet, the length field indication information indicates that the length indication information is not subsequently carried, and content of the header information is further reduced.

In this embodiment of the present invention, if the user equipment and the network device have determined, by means of negotiation, the processing mode for the data packet before the data packet is sent, so that a transmit end and a receive end can uniquely determine the processing mode for the data packet, or can correctly obtain the processing mode for the data packet by means of an attempt, and the header information of the data packet may not carry the first indication information. Therefore, for various encapsulation formats of a data packet that are described in all the embodiments of this patent, first indication information in header information is not necessary.

In a specific implementation, when a mode for processing the data packet by the user equipment serving as a transmit end includes only concatenation of the data packet, as shown in FIG. 6, FIG. 6 is a schematic structural diagram of the user equipment in a second processing mode for a data packet. That the data processing layer performs concatenation on data packets means that the data processing layer combines multiple data packets at an application layer to form one data packet at the data processing layer, and transfers the combined data packet at the data processing layer to a PHY layer. Accordingly, a second encapsulation format corresponding to the second processing mode may be shown in FIG. 7. The data processing layer combines multiple data packets at the application layer to form one data packet at the data processing layer. Header information includes first indication information and at least one piece of subheader information. The first subheader information includes length indication information of the first sub-data packet and header indication information of the first sub-data packet, the second subheader information includes length indication information of the second sub-data packet and header indication information of the second sub-data packet, ..., and the N^{th} subheader information includes length indication information of the N^{th} sub-data packet and header indication information of the N^{th} sub-data packet (N^{th} in this embodiment means the last, and N is an integer greater than or equal to 1). The first indication information is used to indicate a mode for processing a data packet by the user equipment, that is, a concatenation operation is performed on the data packet. Length indication information of a data packet is used to indicate a size of the data packet corresponding to a subheader, and header indication information is used to indicate whether a next field is a data packet or subheader information of a next data packet. Preferably, when a data packet obtained after concatenation does not include padding data, the subheader information of the N^{th} sub-data packet does not need to carry the length indication information (for example, in an embodiment of FIG. 9, FIG. 11, FIG. 12, and FIG. 14). In an optional implementation, length field indication information may be further added to a subheader of each data packet, to indicate whether the subheader of the data packet includes length indication information.

In a specific implementation, a mode for processing the data packet by the user equipment serving as a transmit end includes concatenation and out-of-order transmission of the data packet (in this case, the network device needs to perform reordering when serving as a receive end). Therefore, that the processing mode indicated by the first indication information includes processing of concatenation of the data packet and out-of-order transmission of the data packet is used as an example. As shown in FIG. 8, FIG. 8 is a schematic structural diagram of the user equipment in a third processing mode for a data packet. Therefore, as shown in FIG. 9, based on the header information shown in FIG. 7, sequence number information may be added to the header information of the data packet processed by the data processing layer. The sequence number information is used to indicate numbers of all data packets sent by the user equipment for the first time. The first indication information is used to indicate that the user equipment supports processing modes: concatenation of the data packet and out-of-order transmission of the data packet. When the network device serves as a receive end, sequence number information of data packets is obtained to restore locations of all the data packets. In addition, when the user equipment and the network device support reordering of re-segmented data packets, the user equipment or the network device needs to include a sequence number of each data packet in a subheader of the data packet when the user equipment or the network device serves as a transmit end. For processing of the N^{th} sub-data packet, refer to descriptions of FIG. 7.

In a specific implementation, a mode for processing the data packet by the user equipment serving as a transmit end includes two types of processing modes: segmentation and out-of-order transmission. As shown in FIG. 10, FIG. 10 is a schematic structural diagram of the user equipment in a fourth processing mode. The data processing layer may support segmentation of the data packet and nonsequential transmission of the data packet such as out-of-order transmission of the data packet to a physical layer. Accordingly, as shown in FIG. 11, FIG. 11 is a schematic structural diagram of a fourth type of encapsulation format used after the data processing layer segments the data packet. Header information of a data packet obtained after processing by the data processing layer includes first indication information (optional), sequence number information of a sub-data packet, length indication information of a sub-data packet (optional), and segmentation indication information. The first indication information is used to indicate that the user equipment supports segmentation of the data packet and out-of-order transmission of the data packet. The sequence number information of the sub-data packet is used to indicate a number that is of the sub-data packet and that is at the data processing layer of the user equipment. The length indication information of the sub-data packet is used to indicate a size of the sub-data packet. The segmentation indication information is used to indicate whether the data packet is segmented, or further indicate a location that is of the sub-data packet and that is in data packets obtained after the data packet that is transferred from the application layer to the data processing layer is segmented, for example, the first sub-data packet, a middle sub-data packet, or the last sub-data packet. Further, the segmentation indication information may be further used to indicate whether the length indication information of the sub-data packet exists. If the segmentation indication information indicates that the sub-data packet is not the last sub-data packet, the length indication information does not need to be included in a header information. Optionally, if a receive end does not require that the data packet needs to meet a fixed size, the length indication information does not need to be included in the header information, either. If the data processing layer supports only a segmentation function, a header field does not include the sequence number information.

Optionally, because the sequence number information of the sub-data packet has a meaning similar to that of the segmentation indication information, the sequence number information of the sub-data packet and the segmentation indication information may be combined to form sequence number information of the sub-data packet or segmentation indication information. After combination, a structure of the sub-data packet is shown in FIG. 12 (in FIG. 12, the sequence number information of the sub-data packet and the segmentation indication information are combined to form sequence number information of the sub-data packet).

In this embodiment of the present invention, after the user equipment and the network device determine the processing mode for the data packet, it does not indicate that a user processing layer necessarily performs corresponding processing on the data packet. For example, if the user equipment and the network device determine to use the fourth type of processing mode for the data packet, the user equipment segments the data packet only when the data packet is relatively large and a scheduling grant given by the network cannot ensure that the data packet is sent completely at a time; when the data packet is relatively small and a scheduling grant given by the network side can ensure that the data packet is sent completely at a time, the user equipment does not perform a segmentation operation. For out-of-order transmission in the foregoing embodiment, an error of data packet transmission order may be caused only when some data packets need to be retransmitted. The foregoing indication only indicates that the data processing layer can support out-of-order transmission of data packets, but does not indicate that the data processing layer necessarily performs out-of-order transmission on data packets. Disorder at the data processing layer may be caused by disorder at a physical layer. Disorder caused by all reasons is collectively referred to as disorder at the data processing layer herein.

In a specific implementation, a mode for processing the data packet by the user equipment serving as a transmit end includes concatenation, segmentation, and out-of-order transmission of the data packet. As shown in FIG. 13, FIG. 13 is a schematic structural diagram in a fifth processing mode. The processing mode indicated by the first indication information includes: concatenation of the data packet, segmentation of the data packet, and out-of-order transmission of the data packet. Accordingly, as shown in FIG 14, FIG. 14 is a schematic structural diagram of a fifth type of data packet encapsulation format of a data packet. In the processing mode, a data packet obtained after processing by the data processing layer may include the following types:
1. a complete data packet;
2. a sub-data packet obtained after a data packet is segmented;
3. a data packet obtained after concatenation of multiple complete data packets;
4. a data packet obtained after concatenation of a sub-data packet of a current data packet and next multiple complete data packets;
5. a data packet obtained after concatenation of a sub-data packet of a current data packet and a sub-data packet of a next data packet;
6. a data packet obtained after concatenation of a sub-data packet of a current data packet, next multiple complete data packets, and a sub-data packet of a next data packet.

Each sub-data packet is a segmentation block obtained after a complete data packet at an application layer is segmented by the data processing layer, and more than one sub-data packet forms one complete data packet at the application layer.

In order that the receive end can correctly distinguish between all data packets and/or sub-data packets, the data packet encapsulation format is shown in FIG. 14.

In FIG. 14, header information of the data packet at the data processing layer includes first indication information, sequence number information, and subheader information of multiple data packets. Subheader information of a sub-data packet may include length indication information of the data packet, segmentation indication information of the data packet, and header indication information. For a detailed function of each piece of information in the header information, refer to related descriptions in embodiments of FIG. 5 to FIG. 12. Details are not described again in this embodiment.

Optionally, because a processing mode of out-of-order transmission performed on the data packet by the data processing layer depends on disorder of data packets caused when a PHY layer sends the data packets in a disorderly and concurrent manner, if the PHY layer transmits a data packet by means of a single process, the data processing layer does not need to use the processing mode of out-of-order transmission for the data packet, and corresponding header information of the data packet does not include sequence number information.

The processing mode provided in this embodiment is only an example. According to different processing modes, there are further other data packet encapsulation formats that are not enumerated herein. In all processing modes, sequence number information is not required in the header information, provided that the data processing layer does not include a function of out-of-order transmission (for example, there is only one HARQ process). In the present invention, only some functions of the data processing layer are enumerated, and a possibility is not excluded that the data processing layer further has other functions, for example, multiplexing of a logical channel and encryption. When a logical channel is multiplexed, only an identifier of a logical channel needs to be added to header information of a data packet or header information of a sub-data packet in the foregoing several processing modes. The data processing layer may also send a control data packet. The foregoing data packet encapsulation format may be used for the control data packet and is indicated by using first indication information or an identifier of a logical channel. Alternatively, different processing modes may be used for data packets or control data packets in different logical channels. This is not limited herein.

After processing the data packet according to the determined processing mode, the user equipment sends the data packet to the network device. In this case, the network device may perform corresponding processing on the data packet according to the mode for processing the data packet by the user equipment, so that the network device correctly parses the data packet.

Optionally, after the network device determines, according to the first indication information, the mode for processing the data packet by the user equipment, the network device may feed acknowledgement information back to the user equipment, and the acknowledgement information is used to acknowledge that the network device processes, by using a processing mode corresponding to the mode for processing the data packet by the user equipment, the data packet sent by the user equipment. This embodiment of the present invention is described by using the user equipment as a transmit end. When the network device serves as a data transmit end, a data packet encapsulation format is the same as an encapsulation format used when the user equipment serves as a transmit end.

By using this embodiment of the present invention, user equipment determines a processing mode for a data packet, and the user equipment processes the data packet according to the determined processing mode, and sends the data packet to a network device. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

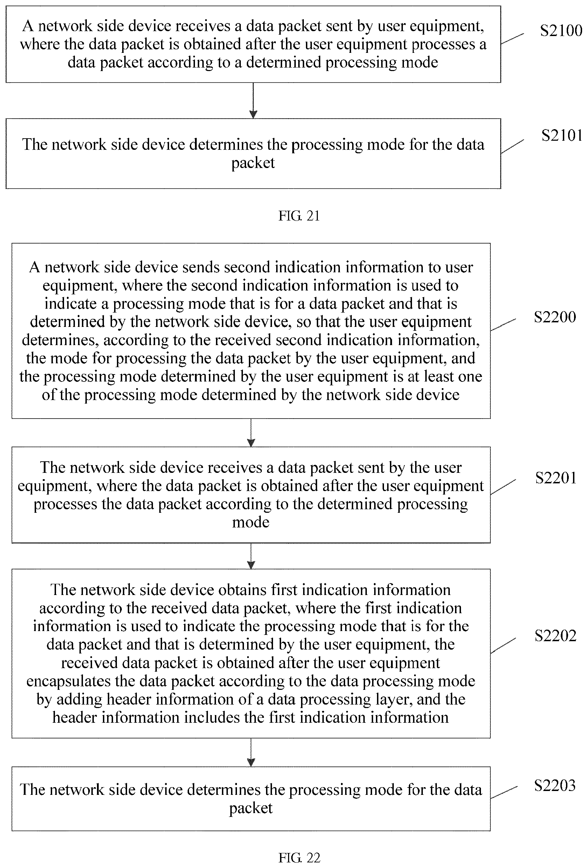

Referring to FIG. 21, FIG. 21 is a schematic flowchart of another embodiment of a method for determining a processing mode for a data packet according to an embodiment of the present invention.

As shown in FIG. 21, the another embodiment of the method for determining a processing mode for a data packet in this embodiment of the present invention may include the following steps.

S2100. A network device receives a data packet sent by user equipment, where the data packet is obtained after the user equipment processes a data packet according to a determined processing mode.

In a specific implementation, the user equipment determines the processing mode for the data packet according to at least one of a device type, a service type, a processing mode supported by the user equipment, a user plane function supported by the user equipment, or a processing mode supported by the network device. The processing mode includes at least one of concatenation of the data packet, segmentation of the data packet, out-of-order transmission of the data packet, or transparent transmission of the data packet. For example, the service type may include parameters such as a size of a service data packet, an arrival time interval between service data packets, and a transmission delay requirement for a service data packet. By using the service type as an example, for a service of transmitting continuous small data packets, the user equipment performs only concatenation on the data packets, and for a service of a meter reading type (a data packet in this type of service is relatively small, and a transmission interval between data packets is large), the user equipment performs no processing at a data processing layer. Therefore, the user equipment first needs to determine the processing mode for the data packet. After the user equipment determines the processing mode for the data packet, when the user equipment sends the data packet to the network device, an encapsulation format of the data packet or content of header information of the data packet is corresponding to the processing mode.

In a specific implementation, the user equipment may support only an undiversified service type. For example, a smart meter supports only a meter reading service. Therefore, a processing mode of the user equipment is fixed. In this case, the user equipment directly determines the processing mode according to a device type.

It should be noted that the processing mode herein may be replaced with a data packet encapsulation format, a function of the data processing layer, or the like, to uniquely determine processing for the data packet.

S2101. The network device determines the processing mode for the data packet.

In a specific implementation, after processing the data packet according to the determined processing mode, the user equipment sends the data packet to the network device. In this case, the network device may perform corresponding processing on the received data packet according to the mode for processing the data packet by the user equipment, so that processing performed by the network device is corresponding to that performed by the user equipment. For example, after the user equipment segments a data packet, the network device needs to combine segmented data packets. Alternatively, after the user equipment performs concatenation on a data packet, the network device needs to decompose a received data packet obtained after the concatenation, to obtain the data packet existing before the concatenation. Alternatively, when data packets are out of order during transmission performed by the user equipment, the network device needs to perform reordering processing on the received data packets.

In a feasible manner, before step S2100, the user equipment may receive second indication information sent by the network device. The second indication information is used to indicate the processing mode that is for the data packet and that is determined by the network device. For example, the second indication information may specifically indicate that: The data processing layer may perform at least one of concatenation of the data packet, segmentation of the data packet, out-of-order transmission of the data packet, or transparent transmission of the data packet. Transparent transmission of the data packet may be indicated in the following manner: The second indication information indicates that none of segmentation, concatenation, and out-of-order transmission of the data packet is supported. If the second indication information given by the network device indicates only one type of processing mode, the user equipment uses the processing mode specified by the network device. The user equipment processes the data packet according to the processing mode specified by the network device, and sends a processed data packet to the network device. The data packet does not need to carry indication information (such as first indication information in the following) of the processing mode for the data packet.

In a feasible manner, after the user equipment determines the mode for processing the data packet by the user equipment, the user equipment sends the first indication information to the network device, so that the network device determines, according to the first indication information, the mode for processing the data packet by the user equipment. The first indication information herein may include at least one of service type information, device type information, data packet encapsulation format information, or function information of the data processing layer. The service type information is a type of a service corresponding to a data packet transmitted between the user equipment and the network device, for example, a streaming media service, a low delay service, or a background service. The function information of the data processing layer includes at least one of segmentation of the data packet, concatenation of the data packet, out-of-order transmission of the data packet, reordering of the data packet, or transparent transmission of the data packet. Transparent transmission means that the data processing layer does not support any function of segmentation, concatenation, or out-of-order transmission.

Optionally, after the network device determines, according to the first indication information, the mode for processing the data packet by the user equipment, the network device may feed acknowledgement information back to the user equipment, and the acknowledgement information is used to acknowledge whether the network device agrees to use a processing mode corresponding to the processing mode selected by the user equipment.

In a feasible manner, this embodiment of the present invention imposes no limitation on a sequence of step S2101 and step S2100. That is, step S2101 may be after step S2100, or step S2101 may be before step S2100.

Optionally, if step S2101 is after step S2100, the user equipment adds the first indication information to the header information of the data packet sent by the user equipment to the network device.

In a specific implementation, when sending the data packet to the network device, the user equipment may add the first indication information to the header information of the data packet. The first indication information is used to indicate the mode for processing the data packet by the user equipment. After receiving the data packet sent by the user equipment, the network device obtains, by parsing the header information, the mode for processing the data packet by the user equipment.

Optionally, if step S2101 is before step S2100, the network device receives the first indication information sent by the user equipment. The first indication information is used to indicate the processing mode that is for the data packet and that is determined by the user equipment.

In a specific implementation, the network device receives the first indication information from signaling that is sent by the user equipment to the network device. Optionally, the signaling sent by the user equipment to the network device may be non-access stratum (NAS) signaling or radio resource control (RRC) signaling.

In a feasible manner, the signaling sent by the user equipment to the network device may be used to request establishment of a service.

In a feasible manner, if the user equipment chooses to add the first indication information to the signaling, when sending the data packet to the network device, the user equipment no longer needs to add the first indication information to the header information of the data packet.

In a feasible manner, the network device receives the first indication information from resource request information that is sent by the user equipment to the network device. The resource request information is used to request a resource required for sending the data packet by the user equipment.

In a specific implementation, when requesting, from the network device, the resource required for sending the data packet, the user equipment notifies the network device of the processing mode that is for the data packet and that is determined by the user equipment. Specifically, the user equipment may add the first indication information to the resource request information. For example, the resource request information may be one or more of random access sequence information, random access time information, or random access frequency information, and each of the random access sequence information, the random access time information, and the random access frequency information may be the first indication information.

Optionally, if the user equipment chooses to add the first indication information to the resource request information, when sending the data packet to the network device, the user equipment no longer needs to add the first indication information to the header information of the data packet.

It should be noted that the processing mode determined in this embodiment of the present invention may be only a processing mode used when the user equipment serves as a transmit end, or may be only a processing mode used when the user equipment serves as a receive end, or may be a common processing mode used when the user equipment serves as both a transmit end and a receive end. This is not limited herein. In addition, the processing mode determined in this embodiment may be used for a service or a bearer of the user equipment, or may be used for all services or all bearers of the user equipment.

By using this embodiment of the present invention, a network device receives a data packet sent by user equipment, where the data packet is obtained after the user equipment processes a data packet according to a determined processing mode, and the network device determines the processing mode for the data packet. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

Referring to FIG. 22, FIG. 22 is a schematic flowchart of another embodiment of a method for determining a processing mode for a data packet according to an embodiment of the present invention.

As shown in FIG. 22, the another embodiment of the method for determining a processing mode for a data packet in this embodiment of the present invention may include the following steps.

S2200. A network device sends second indication information to the user equipment, where the second indication information is used to indicate a processing mode that is for the data packet and that is determined by the network device, so that the user equipment determines, according to the received second indication information, a mode for processing the data packet by the user equipment, and the processing mode determined by the user equipment is at least one of the processing mode determined by the network device.

Optionally, before step S2200, the network device may receive third indication information sent by the user equipment. The third indication information is used to indicate a processing mode that is for the data packet and that is supported by the user equipment. The third indication information may specifically include a function of a data processing layer, a data packet encapsulation format, a number of a processing mode, and the like. Preferably, the third indication information, a service type and a device type of the user equipment, and the like are sent to the network device in same signaling, or a service type of the user equipment or a device type of the user equipment or both also belongs to a type of third indication information. After receiving the third indication information sent by the user equipment, the network device determines, from the obtained processing mode that is for the data packet and that is supported by the user equipment, a mode for processing the data packet by the network device that is corresponding to that for processing the data packet by the user equipment.

In a feasible manner, a processing mode of a transmit end may mean that the transmit end supports at least one of concatenation of the data packet, segmentation of a data packet, out-of-order transmission of a data packet, or transparent transmission of a data packet. Correspondingly, a processing mode of a receive end may be at least one of decomposition of a data packet obtained after concatenation, combination of segmented data packets, reordering of data packets, or transparent transmission of a data packet.

In a feasible manner, transparent transmission at the data processing layer means that the data processing layer does not support any processing of segmentation, concatenation, or out-of-order transmission of a data packet. That is, the data processing layer directly delivers a data packet at an application layer to a bottom layer.

In a specific implementation, the second indication information sent by the network device may indicate the processing mode that is for the data packet and that is determined by the network device. For example, the second indication information may specifically indicate that: The data processing layer may perform at least one of concatenation of the data packet, segmentation of the data packet, out-of-order transmission of the data packet, or transparent transmission of the data packet. Transparent transmission of the data packet may be indicated in the following manner: The second indication information indicates that none of segmentation, concatenation, and out-of-order transmission of the data packet is supported.

It should be noted that out-of-order transmission performed by the transmit end is corresponding to a reordering function of the receive end. This specifically means that the receive end may support out-of-order receiving, and further perform reordering on data packets according to sequence numbers. Generally, because data packets may be out of order when the transmit end performs out-of-order transmission or supports retransmission at the data processing layer, a data packet that is earlier initially transmitted reaches the receive end later than a data packet that is later initially transmitted.

Optionally, the second indication information may indicate that different processing modes may be used. That is, the transmit end may use different processing modes according to a requirement, and indicate a processing mode specific to a data packet in header information of the data packet. The indication manner is in particular applicable to user equipment with multiple services.

In a specific implementation, the user equipment may determine, according to the second indication information from the processing mode that is for the data packet and that is determined by the network device, the mode for processing the data packet by the user equipment. The processing mode determined by the user equipment is at least one of the processing mode determined by the network device. For example, if the second indication information given in S2200 includes only one type of processing mode, the user equipment uses the processing mode specified by the network device. If the second indication information indicates multiple types of processing modes, the user equipment may select at least one type of processing mode from the multiple types of processing modes indicated by the second indication information, and indicate the processing mode to the network device.

S2201. The network device receives a processed data packet sent by the user equipment, where the data packet is obtained after the user equipment processes a data packet according to the determined processing mode.

Optionally, after the user equipment determines the processing mode for the data packet, the user equipment generates first indication information, and adds the first indication information to header information of the data packet sent by the user equipment to the network device, so that the network device determines, according to the first indication information, the mode for processing the data packet by the user equipment. The user equipment encapsulates a data packet according to the processing mode by adding header information of the data processing layer. The header information includes the first indication information.

S2202. The network device obtains first indication information according to the received data packet, where the first indication information is used to indicate the processing mode that is for the data packet and that is determined by the user equipment, the received data packet is obtained after the user equipment encapsulates a data packet according to the processing mode by adding header information of a data processing layer, and the header information includes the first indication information.

In a specific implementation, the first indication information may be at least one of service type information, device type information, data packet encapsulation format information, or function information of the data processing layer.

In a feasible manner, the mode for processing the data packet by the user equipment includes at least one of segmentation of the data packet, concatenation of the data packet, out-of-order transmission of the data packet, or transparent transmission of the data packet.

It should be noted that, this embodiment of the present invention may also be used in direct communication between user equipments. In this case, first user equipment may negotiate with second user equipment about a processing mode in the foregoing manner, to determine a consistent processing mode; or the network device negotiates with each of first user equipment and second user equipment about a processing mode, and the network device selects a consistent processing mode for the first user equipment and the second user equipment. For different processing modes used for a data packet, header information of the data packet is different accordingly. Specifically, encapsulation formats of the data packet are different. An example in which the user equipment serves as a transmit end is specifically used below for description in this embodiment of the present invention. A data packet encapsulation format used when the network device serves as a transmit end is the same as a data packet encapsulation format used when the user equipment serves as a transmit end, and is not described herein again.

In a feasible manner, the mode for processing the data packet by the user equipment may be a transparent transmission mode. The transparent transmission mode herein means that the data processing layer does not support processing of segmentation, concatenation, or out-of-order transmission of the data packet, and only routes the data packet. As shown in FIG. 4, FIG. 4 is a schematic structural diagram in a first processing mode for a data packet. When the user equipment determines that a processing mode at the data processing layer is a transparent transmission mode, the data processing layer directly routes a data packet at an application layer to a PHY layer, and the data packet is transmitted to the network device by using the PHY layer. A process in which the PHY layer processes the data packet may involve processes such as encoding, modulation, and check that are necessary steps in a data packet transmission process. This embodiment imposes no limitation on a mode for processing the data packet at the PHY layer. The data packet at the application layer herein is a data packet that is sent from a protocol layer above the data processing layer to the data processing layer. The data packet may be from the application layer, a TCP layer, or a UDP layer, or may be from a PDCP layer or from a encryption layer above the data processing layer. This is not limited herein.

In a specific implementation, as shown in FIG. 5, FIG. 5 is a schematic diagram of a first type of encapsulation format in the first processing mode for a data packet. When the data processing layer does not need to add padding data to a data packet, the first encapsulation format is shown in a schematic structural diagram illustrated by FIG. 5a. The padding data is a data sequence padded by the data processing layer to ensure that a size of the entire data packet meets a data packet size specified by the network device.

When the data processing layer needs to ensure that the size of the data packet meets the data packet size specified by a network device, in a specific implementation, as shown in FIG. 5b, header information of the data packet may include first indication information and length indication information. In FIG. 5b, the length indication information may be used to indicate a length of the data packet, or may be used to indicate a length of padding data.

In a feasible manner, in FIG. 5b, the header information of the data packet may further include length field indication information, to indicate whether the header information includes the length indication information. When the data processing layer does not add padding data to the data packet, the length field indication information indicates that the length indication information is not subsequently carried, and content of the header information is further reduced.

In this embodiment of the present invention, if the user equipment and the network device have determined, by means of negotiation, the processing mode for the data packet before the data packet is sent, so that a transmit end and a receive end can uniquely determine the processing mode for the data packet, or can correctly obtain the processing mode for the data packet by means of an attempt, and the header information of the data packet may not carry the first indication information. Therefore, for various encapsulation formats of a data packet that are described in all the embodiments of this patent, first indication information in header information is not necessary.

In a specific implementation, when a mode for processing the data packet by the user equipment serving as a transmit end includes only concatenation of the data packet, as shown in FIG. 6, FIG. 6 is a schematic structural diagram of the user equipment in a second processing mode for a data packet. That the data processing layer performs concatenation on data packets means that the data processing layer combines multiple data packets at an application layer to form one data packet at the data processing layer, and transfers the combined data packet at the data processing layer to a PHY layer. Accordingly, a second encapsulation format corresponding to the second processing mode may be shown in FIG. 7. The data processing layer combines multiple data packets at the application layer to form one data packet at the data processing layer. Header information includes first indication information and at least one piece of subheader information. The first subheader information includes length indication information of the first sub-data packet and header indication information of the first sub-data packet, the second subheader information includes length indication information of the second sub-data packet and header indication information of the second sub-data packet, ..., and the N^{th} subheader information includes length indication information of the N^{th} sub-data packet and header indication information of the N^{th} sub-data packet (N^{th} in this embodiment means the last, and N is an integer greater than or equal to 1). The first indication information is used to indicate a mode for processing a data packet by the user equipment, that is, a concatenation operation is performed on the data packet. Length indication information of a data packet is used to indicate a size of the data packet corresponding to a subheader, and header indication information is used to indicate whether a next field is a data packet or subheader information of a next data packet. Preferably, when a data packet obtained after concatenation does not include padding data, the subheader information of the N^{th} sub-data packet does not need to carry the length indication information (for example, in an embodiment of FIG. 9, FIG. 11, FIG. 12, and FIG. 14). In an optional implementation, length field indication information may be further added to a subheader of each data packet, to indicate whether the subheader of the data packet includes length indication information.

In a specific implementation, a mode for processing the data packet by the user equipment serving as a transmit end includes concatenation and out-of-order transmission of the data packet (in this case, the network device needs to perform reordering when serving as a receive end). Therefore, that the processing mode indicated by the first indication information includes processing of concatenation of the data packet and out-of-order transmission of the data packet is used as an example. As shown in FIG. 8, FIG. 8 is a schematic structural diagram of the user equipment in a third processing mode for a data packet. Therefore, as shown in FIG. 9, based on the header information shown in FIG. 7, sequence number information may be added to the header information of the data packet processed by the data processing layer. The sequence number information is used to indicate numbers of all data packets sent by the user equipment for the first time. The first indication information is used to indicate that the user equipment supports processing modes: concatenation of the data packet and out-of-order transmission of the data packet. When the network device serves as a receive end, sequence number information of data packets is obtained to restore locations of all the data packets. In addition, when the user equipment and the network device support reordering of re-segmented data packets, the user equipment or the network device needs to include a sequence number of each data packet in a subheader of the data packet when the user equipment or the network device serves as a transmit end. For processing of the N^{th} sub-data packet, refer to descriptions of FIG. 7.

In a specific implementation, a mode for processing the data packet by the user equipment serving as a transmit end includes two types of processing modes: segmentation and out-of-order transmission. As shown in FIG. 10, FIG. 10 is a schematic structural diagram of the user equipment in a fourth processing mode. The data processing layer may support segmentation of the data packet and nonsequential transmission of the data packet such as out-of-order transmission of the data packet to a physical layer. Accordingly, as shown in FIG. 11, FIG. 11 is a schematic structural diagram of a fourth type of encapsulation format used after the data processing layer segments the data packet. Header information of a data packet obtained after processing by the data processing layer includes first indication information (optional), sequence number information of a sub-data packet, length indication information of a sub-data packet (optional), and segmentation indication information. The first indication information is used to indicate that the user equipment supports segmentation of the data packet and out-of-order transmission of the data packet. The sequence number information of the sub-data packet is used to indicate a number that is of the sub-data packet and that is at the data processing layer of the user equipment. The length indication information of the sub-data packet is used to indicate a size of the sub-data packet. The segmentation indication information is used to indicate whether the data packet is segmented, or further indicate a location that is of the sub-data packet and that is in data packets obtained after the data packet that is transferred from the application layer to the data processing layer is segmented, for example, the first sub-data packet, a middle sub-data packet, or the last sub-data packet. Further, the segmentation indication information may be further used to indicate whether the length indication information of the sub-data packet exists. If the segmentation indication information indicates that the sub-data packet is not the last sub-data packet, the length indication information does not need to be included in a header information. Optionally, if a receive end does not require that the data packet needs to meet a fixed size, the length indication information does not need to be included in the header information, either. If the data processing layer supports only a segmentation function, a header field does not include the sequence number information.

Optionally, because the sequence number information of the sub-data packet has a meaning similar to that of the segmentation indication information, the sequence number information of the sub-data packet and the segmentation indication information may be combined to form sequence number information of the sub-data packet or segmentation indication information. After combination, a structure of the sub-data packet is shown in FIG. 12 (in FIG. 12, the sequence number information of the sub-data packet and the segmentation indication information are combined to form sequence number information of the sub-data packet).

In this embodiment of the present invention, after the user equipment and the network device determine the processing mode for the data packet, it does not indicate that a user processing layer necessarily performs corresponding processing on the data packet. For example, if the user equipment and the network device determine to use the fourth type of processing mode for the data packet, the user equipment segments the data packet only when the data packet is relatively large and a scheduling grant given by the network cannot ensure that the data packet is sent completely at a time; when the data packet is relatively small and a scheduling grant given by the network side can ensure that the data packet is sent completely at a time, the user equipment does not perform a segmentation operation. For out-of-order transmission in the foregoing embodiment, an error of data packet transmission order may be caused only when some data packets need to be retransmitted. The foregoing indication only indicates that the data processing layer can support out-of-order transmission of data packets, but does not indicate that the data processing layer necessarily performs out-of-order transmission on data packets. Disorder at the data processing layer may be caused by disorder at a physical layer. Disorder caused by all reasons is collectively referred to as disorder at the data processing layer herein.

In a specific implementation, a mode for processing the data packet by the user equipment serving as a transmit end includes concatenation, segmentation, and out-of-order transmission of the data packet. As shown in FIG. 13, FIG. 13 is a schematic structural diagram in a fifth processing mode. The processing mode indicated by the first indication information includes: concatenation of the data packet, segmentation of the data packet, and out-of-order transmission of the data packet. Accordingly, as shown in FIG 14, FIG. 14 is a schematic structural diagram of a fifth type of data packet encapsulation format of a data packet. In the processing mode, a data packet obtained after processing by the data processing layer may include the following types:
1. a complete data packet;
2. a sub-data packet obtained after a data packet is segmented;
3. a data packet obtained after concatenation of multiple complete data packets;
4. a data packet obtained after concatenation of a sub-data packet of a current data packet and next multiple complete data packets;
5. a data packet obtained after concatenation of a sub-data packet of a current data packet and a sub-data packet of a next data packet;
6. a data packet obtained after concatenation of a sub-data packet of a current data packet, next multiple complete data packets, and a sub-data packet of a next data packet.

Each sub-data packet is a segmentation block obtained after a complete data packet at an application layer is segmented by the data processing layer, and more than one sub-data packet forms one complete data packet at the application layer.

In order that the receive end can correctly distinguish between all data packets and/or sub-data packets, the data packet encapsulation format is shown in FIG. 14.

In FIG. 14, header information of the data packet at the data processing layer includes first indication information, sequence number information, and subheader information of multiple data packets. Subheader information of a sub-data packet may include length indication information of the data packet, segmentation indication information of the data packet, and header indication information. For a detailed function of each piece of information in the header information, refer to related descriptions in embodiments of FIG. 5 to FIG. 12. Details are not described again in this embodiment.

Optionally, because a processing mode of out-of-order transmission performed on the data packet by the data processing layer depends on disorder of data packets caused when a PHY layer sends the data packets in a disorderly and concurrent manner, if the PHY layer transmits a data packet by means of a single process, the data processing layer does not need to use the processing mode of out-of-order transmission for the data packet, and corresponding header information of the data packet does not include sequence number information.

The processing mode provided in this embodiment is only an example. According to different processing modes, there are further other data packet encapsulation formats that are not enumerated herein. In all processing modes, sequence number information is not required in the header information, provided that the data processing layer does not include a function of out-of-order transmission (for example, there is only one HARQ process). In the present invention, only some functions of the data processing layer are enumerated, and a possibility is not excluded that the data processing layer further has other functions, for example, multiplexing of a logical channel and encryption. When a logical channel is multiplexed, only an identifier of a logical channel needs to be added to header information of a data packet or header information of a sub-data packet in the foregoing several processing modes. The data processing layer may also send a control data packet. The foregoing data packet encapsulation format may be used for the control data packet and is indicated by using first indication information or an identifier of a logical channel. Alternatively, different processing modes may be used for data packets or control data packets in different logical channels. This is not limited herein.

After processing the data packet according to the determined processing mode, the user equipment sends the data packet to the network device. In this case, the network device may perform corresponding processing on the data packet according to the mode for processing the data packet by the user equipment, so that the network device correctly parses the data packet.

Optionally, after the network device determines, according to the first indication information, the mode for processing the data packet by the user equipment, the network device may feed acknowledgement information back to the user equipment, and the acknowledgement information is used to acknowledge that the network device processes, by using a processing mode corresponding to the mode for processing the data packet by the user equipment, the data packet sent by the user equipment. This embodiment of the present invention is described by using the user equipment as a transmit end. When the network device serves as a data transmit end, a data packet encapsulation format is the same as an encapsulation format used when the user equipment serves as a transmit end.

S2203. The network device determines the processing mode for the data packet.

In a specific implementation, after processing the data packet according to the determined processing mode, the user equipment sends the data packet to the network device. In this case, the network device may perform corresponding processing on the received data packet according to the mode for processing the data packet by the user equipment, so that processing performed by the network device is corresponding to that performed by the user equipment. For example, after the user equipment segments a data packet, the network device needs to combine segmented data packets. Alternatively, after the user equipment performs concatenation on a data packet, the network device needs to decompose a received data packet obtained after the concatenation, to obtain the data packet existing before the concatenation. Alternatively, when data packets are out of order during transmission performed by the user equipment, the network device needs to perform reordering processing on the received data packets.

By using this embodiment of the present invention, a network device receives a data packet sent by user equipment, where the data packet is obtained after the user equipment processes a data packet according to a determined processing mode, and the network device determines the processing mode for the data packet. The user equipment and the network device may separately determine the processing mode for the data packet, so as to determine a header mode of the data packet. Therefore, when the user equipment sends a data packet, content of header information of the data packet may be reduced, so that a data packet transmission amount is reduced, overheads of the user equipment are reduced, data transmission costs are reduced, and utilization of air-interface resources is increased.

## Claims

1. An apparatus comprising a sending apparatus (1501) and a processor (1502), wherein:
• the processor (1502) is configured to determine a processing mode for a data packet according to at least one of a device type of the apparatus, a service type, a processing mode supported by the apparatus, a user plane function supported by the apparatus, or a processing mode supported by a network device, and process the data packet according to the determined processing mode,
• the processor (1502) is further configured to add first indication information to resource request information and the sending apparatus (1501) is configured to send the resource request information to the network device, wherein the resource request information is used to request a resource required for sending the processed data packet, wherein the first indication information is used to indicate the processing mode that is for the data packet and that is determined by the processor (1502),
• the sending apparatus (1501) is configured to send the processed data packet to the network device on resource obtained from the network device.

2. The apparatus according to claim 1, wherein the processing mode for the data packet comprises at least one of a segmentation of the data packet, a concatenation of the data packet, an out-of-order transmission of the data packet, or a transparent transmission of the data packet.

3. The apparatus according to any of the preceding claims, wherein the first indication information is at least one of service type information, device type information, function information of a data processing layer, or data packet encapsulation format information.

## Patentansprüche

1. Einrichtung, die eine Sendeeinrichtung (1501) und einen Prozessor (1502) umfasst, wobei: der Prozessor (1502) konfiguriert ist, um einen Verarbeitungsmodus für ein Datenpaket gemäß einer Vorrichtungsart der Einrichtung, einer Dienstart, einem Verarbeitungsmodus, der durch die Einrichtung unterstützt wird, einer Benutzerebenenfunktion, die durch die Einrichtung unterstützt wird, und/oder einem Verarbeitungsmodus, der durch eine Netzvorrichtung unterstützt wird, zu bestimmen und das Datenpaket gemäß dem bestimmten Verarbeitungsmodus zu verarbeiten, der Prozessor (1502) ferner konfiguriert ist, um erste Anzeigeinformationen zu Ressourcenanforderungsinformationen hinzuzufügen, und die Sendeeinrichtung (1501) konfiguriert ist, um die Ressourcenanforderungsinformationen an die Netzvorrichtung zu senden, wobei die Ressourcenanforderungsinformationen genutzt werden, um eine Ressource anzufordern, die für ein Senden des verarbeiteten Datenpakets erforderlich ist, wobei die ersten Anzeigeinformationen genutzt werden, um den Verarbeitungsmodus anzuzeigen, der für das Datenpaket gilt und der durch den Prozessor (1502) bestimmt wird, die Sendeeinrichtung (1501) konfiguriert ist, um das verarbeitete Datenpaket an die Netzvorrichtung auf einer Ressource zu senden, die von der Netzvorrichtung erhalten wird.

2. Einrichtung nach Anspruch 1, wobei der Verarbeitungsmodus für das Datenpaket eine Segmentierung des Datenpakets, eine Verkettung des Datenpakets, eine Übertragung des Datenpakets in einer gestörten Reihenfolge und/oder eine transparente Übertragung des Datenpakets umfasst.

3. Einrichtung nach einem der vorhergehenden Ansprüche, wobei die ersten Anzeigeinformationen Dienstartinformationen, Vorrichtungsartinformationen, Funktionsinformationen einer Datenverarbeitungsschicht und/oder Datenpaketeinkapselungsformatinformationen sind.

## Revendications

1. Appareil comprenant un appareil d'envoi (1501) et un processeur (1502), dans lequel :
• le processeur (1502) est configuré pour déterminer un mode de traitement pour un paquet de données selon un type de dispositif de l'appareil et/ou un type de service et/ou un mode de traitement pris en charge par l'appareil et/ou une fonction de plan d'utilisateur prise en charge par l'appareil et/ou un mode de traitement pris en charge par un dispositif réseau, et pour traiter le paquet de données selon le mode de traitement déterminé,
• le processeur (1502) est en outre configuré pour ajouter des premières informations d'indication aux informations de demande de ressource et l'appareil d'envoi (1501) est configuré pour envoyer les informations de demande de ressource au dispositif réseau, les informations de demande de ressource étant utilisées pour demander une ressource requise pour l'envoi du paquet de données traité, les premières informations d'indication étant utilisées pour indiquer le mode de traitement qui est destiné au paquet de données et qui est déterminé par le processeur (1502),
• l'appareil d'envoi (1501) est configuré pour envoyer le paquet de données traité au dispositif réseau sur la ressource obtenue du dispositif réseau.

2. Appareil selon la revendication 1, dans lequel le mode de traitement pour le paquet de données comprend une segmentation du paquet de données et/ou une concaténation du paquet de données et/ou une transmission dans le désordre du paquet de données et/ou une transmission transparente du paquet de données.

3. Appareil selon l'une quelconque des revendications précédentes, dans lequel les premières informations d'indication sont des informations de type de service et/ou des informations de type de dispositif et/ou des informations de fonction d'une couche de traitement de données et/ou des informations de format d'encapsulation de paquet de données.
